# EUROPEAN PATENT APPLICATION

(11) **EP 4 727 031 A1**
(43) Date of publication of application: **15.04.2026**
(21) Application number: 25206651.9
(22) Date of filing: 03.10.2025
(51) Int. Cl.: H04B 7/185, H04W 76/15

(54) **INFORMATION PROCESSING APPARATUS, CONTROL METHOD, AND PROGRAM**

(30) Priority: 08.10.2024 JP 2024176794
(71) Applicant: Canon Kabushiki Kaisha, Tokyo, 146-8501 (JP)
(72) Inventor: IWATA, Shu, Tokyo, 146-8501 (JP)
(74) Representative: Canon Europe Limited

(57) **Abstract**

A program that is a predetermined application program which, when the program is executed by a computer of an information processing apparatus (101) capable of executing communication using a satellite communication line and communication using a predetermined communication line different from the satellite communication line, causes the computer to execute: an execution step of executing a process for communication with a communication device (151) using the predetermined communication line; and a first control step of executing specific control to disable a satellite communication function for executing communication using the satellite communication line in the information processing apparatus (101), in response to an occurrence of an error in the communication with the communication device (151) using the predetermined communication line, the communication using the predetermined communication line being initiated upon execution of the process by the predetermined application program.

## Description

### TECHNICAL FIELD

The present disclosure relates to an information processing apparatus, a control method, and a program.

### BACKGROUND

There is a known configuration in which an information processing apparatus, such as a smartphone, transmits information for connecting to an access point to a communication device, such as a printer, to enable the communication device to connect to the access point using the information. Japanese Patent Laid-Open No. 2016-127545 describes an information processing apparatus configured to set a connection mode of a communication device, wherein the connection mode is for determining a connection configuration between the information processing apparatus and the communication device by transmitting information to the communication device.

As configurations for performing communication with a communication device become more widespread, there is a growing demand for improving the usability of application programs for performing communication with a communication device.

### SUMMARY

The present disclosure is directed to improve the usability of application programs for performing communication with a communication device.

The present disclosure in its first aspect provides a program that is a predetermined application program (e.g., a computer implemented method) which, when the program is executed by a computer of an information processing apparatus capable of executing communication using a satellite communication line and communication using a predetermined communication line different from the satellite communication line, causes the computer to execute: an execution step of executing a process for communicating with a communication device using the predetermined communication line; and a first control step of executing specific control to disable a satellite communication function in the information processing apparatus in response to an occurrence of an error in the communication with the communication device using the predetermined communication line, wherein the satellite communication function is for executing communication using the satellite communication line, and wherein the communication using the predetermined communication line is initiated upon execution of the process by the predetermined application program.

The present disclosure in its second aspect provides a control method for an information processing apparatus comprising a predetermined application program and capable of executing communication using a satellite communication line and communication using a predetermined communication line different from the satellite communication line, the control method comprising: an execution step of executing a process for communicating with a communication device using the predetermined communication line; and a first control step of executing specific control to disable, in the information processing apparatus, a satellite communication function for executing communication using the satellite communication line, in response to an occurrence of an error in the communication with the communication device using the predetermined communication line, the communication using the predetermined communication line being initiated upon execution of the process by the predetermined application program.

The present disclosure in its third aspect provides an information processing apparatus
comprising a predetermined application program and capable of executing communication using a satellite communication line and communication using a predetermined communication line different from the satellite communication line, the apparatus comprising: execution means for executing a process for communicating with a communication device using the predetermined communication line; and first control means for executing specific control to disable, in the information processing apparatus, a satellite communication function for executing communication using the satellite communication line, in response to an occurrence of an error in the communication with the communication device using the predetermined communication line, the communication using the predetermined communication line being initiated upon execution of the process by the predetermined application program.

Optional features will now be set out. These are applicable singly or in any combination with any aspect of the disclosure.

The method, apparatus, or program according to any aspect of the present disclosure may cause a computer to execute: a determination step of executing a determination regarding the satellite communication line in response to an occurrence of an error in the communication with the communication device using the predetermined communication line initiated upon execution of the process by the predetermined application program. Optionally, when a result of the determination regarding the satellite communication line is a first result, the specific control may be executed, and when the result of the determination regarding the satellite communication line is a second result, the specific control may not be executed.

The determination regarding the satellite communication line may be a determination whether the satellite communication line is connected to a satellite, or whether the satellite communication function is enabled in the information processing apparatus. Optionally, the first result may be indicative of a determination that the satellite communication line is connected to a satellite or a determination that the satellite communication function is enabled in the information processing apparatus. Optionally, the second result may be indicative of a determination that the satellite communication line is not connected to a satellite, or a determination that the satellite communication function is not enabled in the information processing apparatus.

The specific control may include control for prompting a user to disable the satellite communication function in the information processing apparatus or control for displaying a setting screen for disabling the satellite communication function in the information processing apparatus.

The specific control may include control for displaying a setting screen for disabling the satellite communication function in the information processing apparatus. The setting screen may be displayed by another application program different from the predetermined application program. The specific control may include a control (e.g., a command or control signal) for activating the other application program and causing the other application program to display the setting screen.

The method, apparatus, or program according to any aspect of the present disclosure may cause a computer to execute: a second control step of executing a predetermined control in the information processing apparatus to disable a mobile data communication function for executing communication using a mobile data communication line that is different from the satellite communication line and different from the predetermined communication line, in response to an occurrence of an error in the communication with the communication device using the predetermined communication line. The communication using the predetermined communication line may be initiated upon execution of the process by the predetermined application program.

The method, apparatus, or program according to any aspect of the present disclosure may cause a computer to execute: a first determination step of executing a determination regarding the mobile data communication line in response to an occurrence of an error in the communication with the communication device using the predetermined communication line initiated upon execution of the process by the predetermined application program, wherein, when a result of the determination regarding the mobile data communication line is a first result, the predetermined control may be executed, and when the result of the determination regarding the mobile data communication line is a second result, the predetermined control may not be executed.

The method, apparatus, or program according to any aspect of the present disclosure may cause a computer to execute: a second determination step of executing a determination regarding the satellite communication line in response to an occurrence of an error in the communication with the communication device using the predetermined communication line initiated upon execution of the process by the predetermined application program. Optionally, when a result of the determination regarding the satellite communication line is a third result, the specific control may be executed. Optionally, when the result of the determination regarding the satellite communication line is a fourth result, the specific control may not be executed.

Optionally, when the result of the determination regarding the mobile data communication line is the second result, and the result of the determination regarding the satellite communication line is the fourth result, an error screen indicating that communication with the communication device cannot be performed may be displayed by the predetermined application program.

Optionally, the communication with the communication device using the predetermined communication line is a communication for transmitting information for connecting to an access point outside the information processing apparatus to the communication device or a communication for transmitting, to the communication device, at least one of a print job for causing the communication device to perform printing and a scan job for causing the communication device to perform scanning.

The method, apparatus, or program according to any aspect of the present disclosure may further cause a computer to execute an instruction step of issuing a predetermined instruction to an operating system, OS, of the information processing apparatus to identify the predetermined communication line as a communication line to be used for communication by the predetermined application program. The specific control may be executed in response to an occurrence of an error in the communication with the communication device using the predetermined communication line, the communication being initiated upon execution of the process by the predetermined application program, even when the predetermined instruction is executed by the predetermined application program.

The predetermined communication line may comprise a Wi-Fi communication line. An operating system, OS, of the information processing apparatus may comprise an Android^{®} OS version 15 or later.

Optionally, a connection using the predetermined communication line between the information processing apparatus and the communication device may comprise (e.g., may be arranged as, or be indicative of) a connection not via an access point outside the information processing apparatus and the communication device; or a connection via an access point that is outside the information processing apparatus and the communication device and not connected to the Internet.

The program of the first aspect may comprise instructions which, when the program is executed by a computer, causes the computer to carry out the method according to the second aspect, or comprising instructions which, when the program is executed by an apparatus according to the third aspect, causes the apparatus of claim the second aspect. The present disclosure in its fourth aspect provides a computer-readable medium carrying a computer program according to the first aspect.

It will be understood that features implemented in hardware may be implemented in software, and vice versa. Any reference to software and hardware features herein should be construed accordingly. For example, in accordance with other aspects of the disclosure, there are provided a computer program comprising instructions which, when the program is executed by one or more processing units, cause the one or more processing units to carry out the method of any aspect or example described above and a computer readable storage medium carrying the computer program.

The preceding summary is provided for the purpose of summarizing examples of the subject matter described herein. Accordingly, the above-described features should not be construed to narrow the scope or spirit of the subject matter described herein in any way. Moreover, the above and/or proceeding examples may be combined in any suitable combination to provide further examples, except where such a combination is clearly impermissible or expressly avoided. Other features of the present disclosure will become apparent from the following description of embodiments with reference to the attached drawings.

### BRIEF DESCRIPTION OF THE DRAWINGS

Fig. 1 is a diagram illustrating an example of a communication system according to an embodiment.
Fig. 2 illustrates an example of a block diagram of an information processing apparatus and a communication device according to an embodiment.
Figs. 3A and 3B illustrate a flowchart illustrating an example of a process executed by the information processing apparatus by a first application according to an embodiment.
Fig. 4 is a diagram illustrating an example of a screen for a direct connection.
Fig. 5 is a diagram illustrating an example of a password input screen.
Fig. 6A is a diagram illustrating an example of a password confirmation screen.
Fig. 6B is a diagram illustrating an example of a password confirmation screen.
Fig. 7 is a flowchart illustrating an example of a process executed by the information processing apparatus by the first application.
Fig. 8 is a flowchart illustrating an example of a process executed by the information processing apparatus by the first application.
Fig. 9A is a diagram illustrating an example of a dialog displayed by the first application.
Fig. 9B is a diagram illustrating an example of a dialog displayed by the first application.
Fig. 9C is a diagram illustrating an example of a screen displayed by the first application.

### DESCRIPTION OF THE EMBODIMENTS

Embodiments of the present disclosure will now be discussed with reference to the accompanying figures. The following description of embodiments is described by way of example. Further embodiments will be apparent to those skilled in the art.
First Embodiment: An information processing apparatus and a communication device included in a communication system according to the present embodiment will be described. The information processing apparatus is also referred to as a terminal device. Although the present embodiment illustrates a smartphone as an example of the information processing apparatus, this is intended as an example only. Other examples of the information processing apparatus include a personal computer (PC), a tablet terminal, a personal digital assistant (PDA), a digital camera, and various other applicable devices. This embodiment illustrates a printer as an example of the communication device. The printer may be either an ink-jet printer that prints with ink or a laser-beam printer that prints with toner. The printer may be either a full-color printer capable of color printing or a monochrome printer capable of monochrome printing, rather than color printing. In the present embodiment, the communication device is not limited to printers and may be various other communication devices capable of wireless communication with the information processing apparatus. Examples of the communication device include a copying machine, a facsimile machine, a scanner, a smartphone, a PC, a tablet terminal, a PDA, a digital camera, a music playback device, a television set, a smart speaker, a robotic cleaner, an automatic cooker, a refrigerator, and various other applicable devices. Other examples include multifunctional peripherals having multiple functions, such as a copying function, a FAX function, and a printing function.

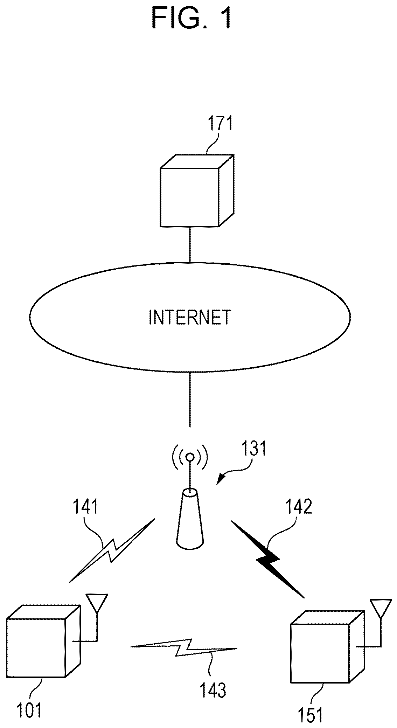

First, a system configuration for implementing the present embodiment will be described. Fig. 1 is a diagram illustrating an example of the configuration of a communication system according to the present embodiment. This system includes a communication device 151, an information processing apparatus 101, an access point (AP) 131, and an external server 171.

The information processing apparatus 101 is an information processing apparatus according to the present embodiment. The communication device 151 is a communication device according to the present embodiment. The AP 131 is an access point activated by an external device that is located outside the information processing apparatus 101 and the communication device 151. One example of the external device is a wireless local area network (LAN) router. The external server 171 is configured to provide services to a device connected to the AP 131 via the Internet.

In a state in which the communication device 151 and the information processing apparatus 101 are connected to the AP 131, the LAN formed by the AP 131 includes the AP 131, the communication device 151, and the information processing apparatus 101. In contrast, a wide area network (WAN) includes the AP 131 and the external server 171.

In the present embodiment, in a case where an infrastructure connection described later has been established, the information processing apparatus 101 can communicate with the communication device 151 via the AP 131. In a case where a direct connection, described later, has been established, the information processing apparatus 101 can directly communicate with the communication device 151 not via the AP 131. In the following, the connection to the AP corresponds to a connection to a network formed by the AP. A single external device may activate multiple APs and can simultaneously form multiple networks.

In the present embodiment, a connection 141 between the information processing apparatus 101 and the AP 131, and a connection 142 between the communication device 151 and the AP 131 are connections using a communication scheme based on the IEEE802.11 series of standards. The communication scheme based on the IEEE802.11 series of standards is, specifically, Wireless Fidelity (Wi-Fi)^{®}. A connection 143 between the information processing apparatus 101 and the communication device 151 is also a connection using the communication scheme based on the IEEE802.11 series of standards. However, the communication scheme for use in the connection 143 is not limited to this configuration; for example, Bluetooth^{®} Low Energy (BLE), Bluetooth Classic, Wi-Fi Aware, and Near Field Communication (NFC) are possible. The AP 131 and the external server 171 can communicate with each other via the Internet. In a state in which the AP 131 is connected to the Internet, the devices (the information processing apparatus 101 and the communication device 151) connected to the AP 131 can also use the Internet. The connection 141 between the information processing apparatus 101 and the AP 131 and the connection 142 between the communication device 151 and the AP 131 may be connections via a wired LAN.

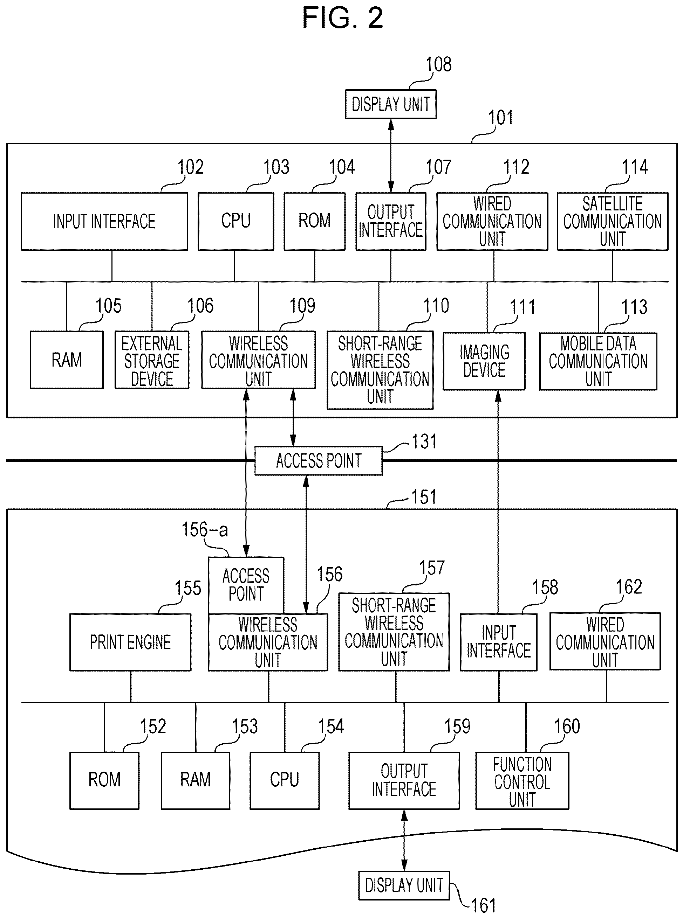

Next, the configuration of an information processing apparatus and a communication device that can communicate with the information processing apparatus according to the present embodiment will be described with reference to the block diagram of Fig. 2. Although the present embodiment is described using the following configuration as an example, the present embodiment is applicable to any apparatus capable of communicating with a communication device, and the functions are not limited to the functions of Fig. 2.

The information processing apparatus 101 includes an input interface 102, a central processing unit (CPU) 103, a read-only memory (ROM) 104, a random-access memory (RAM) 105, an external storage device 106, an output interface 107, a display unit 108, a wireless communication unit 109, a short-range wireless communication unit 110, an imaging device 111, a wired communication unit 112, a mobile data communication unit 113, a satellite communication unit 114, and the like. The CPU 103, the ROM 104, and the RAM 105 configure the computer of the information processing apparatus 101.

The input interface 102 is an interface for receiving data input and operation instructions from the user. Examples include a physical keyboard, buttons, and a touch panel. The output interface 107, described later, and the input interface 102 may have a similar configuration, and output to the screen and reception of operations from the user may be performed using the same configuration.

The CPU 103 is a system control unit and controls the overall information processing apparatus 101. In the present embodiment, the CPU 103 performs processes including control of the display contents of the display unit 108 (e.g., a display control).

The ROM 104 stores fixed data, such as control programs executed by the CPU 103, data tables, and an operating system (hereinafter referred to as an OS) program. In the present embodiment, the control programs stored in the ROM 104 perform software execution control, such as scheduling, task switching, and interrupt processing, under a built-in OS stored in the ROM 104. In the present embodiment, the ROM 104 stores a predetermined application program (e.g., a 'app') for controlling the communication device 151. In other words, the application program is application software. The predetermined application is installed in the information processing apparatus 101 from an external source, for example, via a store application for installing various applications. The predetermined application is an application provided by the vendor of the communication device 151, and is used to communicate with the communication device 151 to perform connection setting for the communication device 151. The predetermined application may have functions other than the function for performing connection setting for the communication device 151. Specific examples of the other functions include a function for transmitting a print job for causing the communication device 151 to execute printing (a print job transmission function) and a scan job for causing the communication device 151 to execute scanning (a scan job transmission function). The processes that are described as processes to be executed by the OS in the present embodiment are, in fact, processes executed by the CPU 103 according to the programs in the OS. Similarly, the processes to be executed by the application are, in fact, processes executed by the CPU 103 according to the programs in the application.

The RAM 105 is constituted by a static random-access memory (SRAM) or the like that requires a backup power supply. The RAM 105 stores data using a primary backup battery (not shown) and can therefore store important data such as program control variables in a volatile manner. The RAM 105 further includes a memory area for storing setting information on the information processing apparatus 101 and management data on the information processing apparatus 101. The RAM 105 is also used as a main memory and a work memory for the CPU 103.

The external storage device 106 includes a printing information generation program for generating printing information that can be interpreted by the communication device 151, an information transmission/reception control program for transmitting/receiving information to/from the communication device 151 connected via the wireless communication unit 109, and various other programs. The external storage device 106 also stores various pieces of information to be used by the programs and image data acquired from other information processing apparatuses or the Internet.

The output interface 107 is used to control the display unit 108 to display data and perform notification of the state of the information processing apparatus 101.

The display unit 108 is constituted by, for example, a light-emitting diode (LED) or a liquid-crystal display (LCD), and performs data display and notification of the state of the information processing apparatus 101. By placing a software keyboard including a numeric input key, a mode setting key, an enter key, a cancel key, and a power key on the display unit 108, input from the user may be received via the display unit 108. In the present embodiment, the display unit 108 is a touch panel, enabling operations using fingers or an operation member, such as a pen, to be received from the user.

The wireless communication unit 109 is configured to connect wirelessly to the communication device 151, the AP 131, or another device to perform data communication. For example, the wireless communication unit 109 may communicate with the communication device 151 using wireless communication either directly or via the AP 131 located outside the information processing apparatus 101 and the communication device 151. In the present embodiment, the wireless communication scheme of the wireless communication unit 109 is Wi-Fi, which is a communication scheme based on the IEEE802.11 standard, but Bluetooth Classic or the like may be used. In the present embodiment, the wireless LAN is a network via Wi-Fi. In the present embodiment, the connection between the information processing apparatus 101 and the communication device 151 using the direct communication scheme not via an external AP is referred to as a direct connection. The connection between the information processing apparatus 101 and the communication device 151 using the scheme via an external AP is referred to as an infrastructure connection. The wireless communication unit 109 is configured to perform Wi-Fi communication when a Wi-Fi communication function is enabled in the information processing apparatus 101, and not to perform Wi-Fi communication when the Wi-Fi communication function is disabled in the information processing apparatus 101.

The short-range wireless communication unit 110 is configured to execute data communication with the communication device 151 or the like using a short-range wireless communication scheme and performs communication using a communication scheme different from that of the wireless communication unit 109. The short-range wireless communication unit 110 is capable of connecting to the short-range wireless communication unit 157 in the communication device 151. Examples of the communication scheme of the short-range wireless communication unit 110 include Bluetooth low energy (BLE), Bluetooth Classic, Wi-Fi Aware, and Near field communication (NFC). The short-range wireless communication unit 110 is configured to execute short-range wireless communication when a short-range wireless communication function is enabled in the information processing apparatus 101, and not to execute short-range wireless communication when the short-range wireless communication function is disabled in the information processing apparatus 101.

The imaging device 111 is used to convert images captured by an image sensor to digital data.

The digital data is once stored in the RAM 105. Thereafter, the digital data is converted to a predetermined image format by a program executed by the CPU 103 and stored as image data in the external storage device 106.

The wired communication unit 112 is configured to connect to the communication device 151, the AP 131, or another device by wire to execute data communication. For example, the wired communication unit 112 performs communication via a wired LAN. In the present embodiment, the wired LAN communicates in accordance with the Ethernet standard; however, this configuration is illustrative only. The wired communication unit 112 may perform communication, for example, via a universal serial bus (USB) cable. If the information processing apparatus 101 is a smartphone, the information processing apparatus 101 does not necessarily have to include the wired communication unit 112.

The mobile data communication unit 113 is configured to perform mobile data communication. The mobile data communication is Internet communication via a telephone line and is also referred to as mobile communication. Specifically, mobile data communication uses standards such as 3G, 4G, 5G, 6G, and LTE. The mobile data communication unit 113 is configured to perform mobile data communication when a mobile data communication function is enabled in the information processing apparatus 101 and not to perform mobile data communication when the mobile data communication function is disabled in the information processing apparatus 101.

The satellite communication unit 114 is configured to perform satellite communication. Satellite communication performed by the satellite communication unit 114 is mainly used as a message transmission and reception function using a message communication application of the information processing apparatus 101 or a rich communication services (RCS) function. The satellite communication unit 114 is configured to perform satellite communication when a satellite communication function is enabled in the information processing apparatus 101 and not to perform satellite communication when the satellite communication function is disabled in the information processing apparatus 101. The information processing apparatus 101 may not include the satellite communication unit 114. Whether the information processing apparatus 101 includes the satellite communication unit 114 depends on its model, market destination, and OS version. Specifically, an information processing apparatus 101 having an Android^{®} OS version 15 or later includes the satellite communication unit 114. An information processing apparatus 101 having an Android^{®} OS earlier than Android^{®} OS version 15 does not include the satellite communication unit 114. Even if the information processing apparatus 101 has an Android^{®} OS version 15 or later, it may not include the satellite communication unit 114, depending on its model or market destination. Even if the information processing apparatus 101 includes the satellite communication unit 114, it may be controlled not to perform satellite communication using the satellite communication unit 114, depending on its model or market destination. An information processing apparatus 101 having an OS other than the Android^{®} OS may include the satellite communication unit 114.

The communication device 151 includes a ROM 152, a RAM 153, a CPU 154, a print engine 155, a wireless communication unit 156, a short-range wireless communication unit 157, an input interface 158, an output interface 159, a function control unit 160, a display unit 161, and a wired communication unit 162.

The ROM 152, the RAM 153, the CPU 154, and so on constitute the computer of the communication device 151.

The wireless communication unit 156 is configured to connect wirelessly to the information processing apparatus 101, the AP 131, or another device to perform data communication. In the present embodiment, the wireless communication scheme of the wireless communication unit 156 is Wi-Fi, which is a communication scheme based on the IEEE802.11 standard, but Bluetooth Classic or the like may be used. The wireless communication unit 156 includes an AP 156-a, as an AP in the communication device 151, for connecting to the information processing apparatus 101 or another device. The AP 156-a is capable of connecting to the wireless communication unit 109 of the information processing apparatus 101. The wireless communication unit 156 may directly communicate with the information processing apparatus 101 via the AP 156-a or may communicate with the information processing apparatus 101 via the AP 131. The AP 156-a may be hardware that functions as an AP, or the wireless communication unit 156 may operate as the AP 156-a by using software for enabling the wireless communication unit 156 to function as an AP. The communication device 151 may be configured to activate multiple APs with different service set identifiers (SSIDs) or passwords.

The RAM 153 is constituted by a dynamic RAM (DRAM) that requires a backup power supply. The RAM 153 retains data by being supplied with power for data backup (not shown) and therefore can store important data, such as variables for program control, without volatilizing them. The RAM 153 is also used as the main memory and a work memory for the CPU 154 and stores various pieces of information as a reception buffer for temporarily storing printing information received from the information processing apparatus 101 or the like.

The ROM 152 stores fixed data, such as control programs to be executed by the CPU 154, data tables, and an OS program. In the present embodiment, the control programs stored in the ROM 152 perform software execution control, such as scheduling, task switching, and interrupt processing, under a built-in OS stored in the ROM 152. The ROM 152 further includes a memory area for storing data to be retained even when no power is supplied, such as setting information on the communication device 151 and management data on the communication device 151.

The CPU 154 is a system control unit and controls the overall communication device 151.

The print engine 155 forms an image on a print medium, such as paper, using a printing agent, such as ink, in accordance with information stored in the RAM 153 and a print job received from the information processing apparatus 101 or the like and outputs the print result. The print job sent from the information processing apparatus 101 or the like has a large amount of transmit data and requires high-speed communication, and is therefore received via the wireless communication unit 156, which is capable of communication at higher speed than the short-range wireless communication unit 157.

The short-range wireless communication unit 157 is configured to communicate with the information processing apparatus 101 or the like using a short-range wireless communication scheme. Examples of the communication scheme of the short-range wireless communication unit 157 include BLE, Bluetooth Classic, and Wi-Fi Aware.

The input interface 158 is an interface for receiving data input and operation instructions from the user. Examples include a physical keyboard, buttons, and a touch panel. The output interface 159, described later, and the input interface 158 may have a similar configuration, and output to the screen and reception of operations from the user may be performed using the same configuration. The output interface 159 is an interface that controls the display unit 161 to display data and perform notification of the state of the communication device 151.

The function control unit 160 manages functional operations to operate the functions of the communication device 151 whether simultaneously or not.

The display unit 161 is constituted by, for example, a light-emitting diode (LED) or a liquid crystal display (LCD), and performs data display and notification of the state of the communication device 151. By placing a software keyboard including a numeric input key, a mode setting key, an enter key, a cancel key, and a power key on the display unit 161, input from the user may be received via the display unit 161.

The wired communication unit 162 is configured to connect to the information processing apparatus 101, the AP 131, or another device by wire to execute data communication. For example, the wired communication unit 162 performs communication via a wired LAN; however, this configuration is illustrative only. The wired communication unit 162 may perform communication, for example, via a USB cable.

### Direct Connection Scheme

Direct connection refers to a configuration in which devices are connected to each other directly (that is, peer to peer) not via an external device, such as the AP 131. The direct connection is also referred to as a peer-to-peer connection (P2P connection). The communication device 151 is operable in a mode for communication via a direct connection as one of connection modes (a direct connection mode). In Wi-Fi communication, there are multiple modes for communication via a direct connection, such as a software AP mode or Wi-Fi Direct (WFD) mode.

A mode for executing a direct connection via WFD is referred to as a WFD mode. WFD is a standard established by Wi-Fi Alliance, and is included in the communication standards of the IEEE802.11 series. In the WFD mode, after a device serving as a communications target is discovered in response to a device search command, the roles of the group owner (GO) and the client of P2P are determined, and then the remaining process for the wireless connection is performed. The group owner corresponds to the parent station (base station) of Wi-Fi, and the client corresponds to the child station (remote station) of Wi-Fi. This role determination corresponds to, for example, GO Negotiation in P2P. In the WFD mode before the role determination is performed, the communication device 151 is neither the parent station nor the child station. Specifically, one of the devices issues a device search command to search for a device to be connected in the WFD mode. When the other device serving as a communication target is discovered, both devices confirm information on services and functions they can provide. Note that this confirmation of device capability information is optional and not mandatory. The device-capability-information confirmation phase corresponds to, for example, Provision Discovery of the P2P connection. Next, by confirming the device capability information with each other, it is determined which device serves as the client of the P2P, and which device serves as the group owner. Next, when the client and the group owner are determined, parameters for communication via WFD are exchanged between them. The remaining processes for the wireless connection and the IP connection are performed between the client and the group owner of the P2P connection based on the exchanged parameters. In the WFD mode, the communication device 151 may always operate as the GO without executing GO Negotiation described above. In other words, the communication device 151 may operate in the WFD mode, which is an Autonomous GO mode. Examples of the state in which the communication device 151 operates in the WFD mode include a state in which the WFD connection is not established, but the communication device 151 is operating as the GO and a state in which the WFD connection is established, and the communication device 151 is operating as the GO.

In the software AP mode, one (for example, the information processing apparatus 101) of the communication devices (for example, the information processing apparatus 101 and the communication device 151) serves as the client that requests various services. The other device implements the AP function in Wi-Fi through software settings. The software AP corresponds to the parent station in Wi-Fi, and the client corresponds to the child station in Wi-Fi. In the software AP mode, the client searches for a device serving as the software AP by issuing a device search command. When the software AP is discovered, the remaining wireless connection processes (such as establishing a wireless connection) are performed between the client and the software AP, followed by IP connection processes (such as assigning an IP address). The commands and parameters transmitted and received in implementing a wireless connection between the client and the software AP may be those defined in the Wi-Fi standard, and the descriptions are omitted here.

In the present embodiment, when the communication device 151 establishes and maintains a direct connection, the communication device 151 operates as the parent station in the network to which it belongs. The parent station is a device constituting a wireless network, and provides parameters for use in connecting to the wireless network to the child station. The parameters for use in connecting to the wireless network are, for example, parameters related to a channel to be used by the parent station. The child station receives the parameters, thereby connecting to the wireless network constituted by the parent station using the channel used by the parent station. In the direct connection mode, the communication device 151 can determine what frequency band and what channel are to be used for communication in the direct connection mode to operate as the parent station. In the present embodiment, the communication device 151 can use a channel corresponding to a frequency band of 2.4 GHz and a channel corresponding to a frequency band of 5 GHz in communication in the direct connection mode.

### Infrastructure Connection Scheme

The infrastructure connection is a connection configuration for connecting to an AP (for example, the AP 131) that manages the network of communication devices (for example, the information processing apparatus 101 and the communication device 151) to enable the devices to communicate with each other via the AP. The communication device 151 is also operable in the infrastructure connection mode, which is one of the connection modes for communication via an infrastructure connection.

In the infrastructure connection, the devices search for an AP by issuing a device search command. When the AP is discovered, the remaining wireless connection processes (such as establishing a wireless connection) between the device and the AP are performed, followed by IP connection processes (such as assigning an IP address). The commands and parameters transmitted and received in implementing a wireless connection between the device and the AP may be those defined in the Wi-Fi standard, and the descriptions are omitted here.

In the present embodiment, when the communication device 151 operates in the infrastructure connection, the AP 131 operates as the parent station, and the communication device 151 operates as the child station. In other words, in the present embodiment, the infrastructure connection refers to a connection between the communication device 151 that operates as the child station and a device that operates as the parent station. When the communication device 151 has established the infrastructure connection and the information processing apparatus 101 has also established the infrastructure connection to the AP 131, communication between the communication device 151 and the information processing apparatus 101 via the AP 131 is possible. Since a channel for use in communication via the infrastructure connection is determined by the AP 131, the communication device 151 executes communication via the infrastructure connection using the channel determined by the AP 131. In the present embodiment, the communication device 151 can use a channel corresponding to a frequency band of 2.4 GHz and a channel corresponding to a frequency band of 5 GHz for communication via the infrastructure connection. The communication device 151 can also use a channel corresponding to a dynamic frequency selection (DFS) band in the frequency band of 5 GHz for communication via the infrastructure connection. The information processing apparatus 101 recognizes and identifies the communication device 151 that belongs to the network, which is configured by the AP 131 and to which the information processing apparatus 101 belongs, in order to communicate with the communication device 151 via the AP 131.

### Connection Setting Process

In the present embodiment, the information processing apparatus 101 executes connection settings (network settings) for operating the communication device 151 via at least one of the infrastructure connection and the direct connection using wireless communication with the communication device 151. The connection setting process according to the present embodiment is executed via wireless communication and is therefore also referred to as cableless setup (CLS). The connection setting process may be executed via wired communication. The information processing apparatus 101 performs the connection setting process on the communication device 151 when the predetermined application stored in, for example, the external storage device 106, is activated. The communication device 151 is operable in a connection setting mode (a connection setting state) for executing the connection setting process and executes the connection setting process during operation in the connection setting mode, described later. The details of the connection setting mode will be described later.

When operating the communication device 151 in the infrastructure connection mode, the information processing apparatus 101 wirelessly transmits infrastructure setting information, which is setting information for operating the communication device 151 in the infrastructure connection mode, to the communication device 151. The infrastructure setting information includes information on the AP 131. Examples of the information on the AP 131 include information on a service set identifier (SSID), a password, and a frequency band.

In contrast, when operating the communication device 151 in the direct connection mode, the information processing apparatus 101 wirelessly transmits direct setting information, which is setting information for operating the communication device 151 in the direct connection mode, to the communication device 151. The direct setting information includes instructions for enabling the WFD function to operate the communication device 151 as the Group Owner and enabling the access point setting of the communication device 151. The information processing apparatus 101 acquires connection information necessary for directly connecting to the communication device 151 from the communication device 151. The connection information for directly connecting to the communication device 151 includes, for example, the SSID and the password of the communication device 151 operated in the direct connection mode.

In the present embodiment, to transmit the infrastructure setting information and the direct setting information and to acquire information for directly connecting to the communication device 151, the connection setting process uses a direct connection for setting a connection between the information processing apparatus 101 and the communication device 151. Although the present embodiment executes a connection setting process using Wi-Fi as the direct connection for connection settings, a wireless communication standard other than Wi-Fi, such as Bluetooth, may be used. Alternatively, wired communication standards, such as a wired LAN and a universal serial bus (USB), may be used for the direct connection for connection settings.

After an infrastructure connection or a direct connection via Wi-Fi is established between the information processing apparatus 101 and the communication device 151 by the connection setting process, communication between the information processing apparatus 101 and the communication device 151 becomes possible via the established connection. Specifically, for example, the information processing apparatus 101 can transmit a print job for causing the communication device 151 to execute printing or a scan job for causing the communication device 151 to execute scanning to the communication device 151 via the established connection. In the present embodiment, the communication device 151 can be operated either in the infrastructure connection mode or in the direct connection mode through the connection setting process; however, this configuration is illustrative only. For example, the communication device 151 may be operated only in the infrastructure connection mode (in other words, the communication device 151 cannot be operated in the direct connection mode) through the connection setting process.

### Connection Setting Mode

The communication device 151 is operable in the connection setting mode. A trigger to cause the communication device 151 to enter the connection setting mode may include, for example, the user pressing a button for the connection setting mode and the communication device 151 being activated (powered on) for the first time after shipment. The button for the connection setting mode may be either a hardware button (e.g., a physical button) provided at the communication device 151 or a software button displayed on the display unit 132 by the communication device 151.

When the communication device 151 enters the connection setting mode, both of Wi-Fi communication and BLE communication are enabled. Specifically, the communication device 151 enables an AP (a connection setting AP) dedicated for the connection setting mode in the communication device 151 to enable Wi-Fi communication. This causes the communication device 151 to enter a state in which the direct connection to the information processing apparatus 101 via Wi-Fi can be established. The connection information (e.g., the SSID and the password) for connecting to the connection setting AP is stored in advance in the predetermined application installed in the information processing apparatus 101. In other words, the information processing apparatus 101 recognizes the connection information for connecting to the connection setting AP in advance. For this reason, unlike connection information on an AP enabled in the direct connection mode, the connection information for connecting to the connection setting AP cannot be freely changed by the user. The connection setting AP may not employ an encryption scheme and may not need a password for connecting to the AP. In the connection setting mode, the communication device 151 may connect to the information processing apparatus 101 via Wi-Fi Direct (WFD), rather than common Wi-Fi. In other words, the communication device 151 may operate as the Group Owner and receive a setting command from the information processing apparatus 101 through WFD communication. When the communication device 151 does not have a BLE communication function, for example, the communication device 151 may enable only Wi-Fi communication during operation in the connection setting mode. For example, when the communication device 151 does not have a BLE communication function, the communication device 151 may enable only Wi-Fi communication during operation in the connection setting mode.

### Registering Communication Device with Application

In the present embodiment, the predetermined application can register the communication device 151 by acquiring, from the communication device 151, information regarding the communication device 151.

Examples of the information regarding the communication device 151 include capability information on the communication device 151, identification information (e.g., a MAC address) of the communication device 151, and model information of the communication device 151. The capability information of the communication device 151 includes, specifically, a list of information on the functions supported by the communication device 151, information on consumables available for the communication device 151 (ink and paper), and information indicating the printing method of the communication device 151. The predetermined application selects one from one or a plurality of communication devices 151 registered with the predetermined application as a communication target via the predetermined application. The communication device 151 that is currently selected as a communication target via the predetermined application is hereinafter referred to as a communication device 151 being selected. The selection of a device serving as a communication target via the predetermined application may be performed by receiving user's selection from one or a plurality of communication devices 151 registered with the predetermined application or may be automatically performed by the predetermined application in accordance with a predetermined criterion. Change of a communication target via the predetermined application may be performed by receiving user's selection from one or a plurality of communication devices 151 registered with the predetermined application. In the present embodiment, the predetermined application transmits various jobs, such as a print job and a scan job, to the selected communication device 151. In other words, the selected communication device 151 is a device to which various jobs are transmitted. In the present embodiment, the communication via the application refers to communication initiated in response to an instruction to the OS from the application.

### Problems Solved by Present Embodiment

In the present embodiment, the information processing apparatus 101 may perform predetermined communication controlled by the predetermined application via a Wi-Fi connection that is not connected to the Internet. A specific example of the Wi-Fi connection that is not connected to the Internet is a direct connection via Wi-Fi between the information processing apparatus 101 and the communication device 151 not via the access point 131. Another example is an infrastructure connection via Wi-Fi between the information processing apparatus 101 and the communication device 151 via the access point 131 that is not connected to the Internet. A specific example of a Wi-Fi connection connected to the Internet is an infrastructure connection via Wi-Fi between the information processing apparatus 101 and the communication device 151 via the access point 131 connected to the Internet. A specific example of the predetermined communication is communication for performing connection setting for the communication device 151, which is performed via a Wi-Fi direct connection between the information processing apparatus 101 and the communication device 151 operating in the connection setting mode. A specific example of the predetermined communication is communication for transmitting various jobs to the communication device 151.

In the present embodiment, the information processing apparatus 101 supports a multi-network function. The multi-network function is a function that establishes a plurality of communication lines in parallel. The multi-network function enables, for example, the information processing apparatus 101 to establish a Wi-Fi communication line using the wireless communication unit 109, a mobile data communication line using the mobile data communication unit 113, and a satellite communication line using the satellite communication unit 114 in parallel. The communication line is, in other words, a communication path or a connection for communication. The information processing apparatus 101 has a function that determines whether the individual communication lines are connected to the Internet.

The function is, in other words, a function for determining whether each network to which the information processing apparatus 101 is connected is connected to the Internet. The OS of the information processing apparatus 101 controls, for each application, which communication line is to be used for communication via the application. In other words, the OS of the information processing apparatus 101 identifies, for each application, a communication line to be used in communication using the application. When a plurality of communication lines are concurrently established in parallel using the multi-network function, the OS of the information processing apparatus 101 controls the communication using a particular application such that a communication line connected to the Internet is preferentially used. In other words, the OS of the information processing apparatus 101 preferentially identifies a communication line connected to the Internet as a communication line to be used for communication via a particular application. In other words, even when a plurality of communication lines have been concurrently established in parallel using a multi-network function, the information processing apparatus 101 does not concurrently use the plurality of communication lines as communication via a particular application. When a plurality of connections via a plurality of communication lines has been established, the state of the information processing apparatus 101 is such that it has established a plurality of connections via the plurality of communication lines, and can perform communication via a communication line connected to the Internet as communication via a particular application but cannot perform communication via a communication line other than the communication line connected to the Internet as communication via the predetermined application.

In the present embodiment, the communication device 151 is not capable of connecting to the Internet by itself. For this reason, in a situation where the information processing apparatus 101 is directly connected to the communication device 151, a Wi-Fi communication line using the wireless communication unit 109 constitutes a communication line that is not connected to the Internet. Even in a situation where the information processing apparatus 101 is infrastructure-connected to the communication device 151 via an access point 131 that is not connected to the Internet, a Wi-Fi communication line using the wireless communication unit 109 constitutes a communication line that is not connected to the Internet. In general, a satellite communication line using the satellite communication unit 114 constitutes a communication line that is not connected to the Internet. In general, a mobile data communication line using the mobile data communication unit 113 constitutes a communication line connected to the Internet. Therefore, when the information processing apparatus 101 is connected to the communication device 151 via a Wi-Fi connection that is not connected to the Internet, and a Wi-Fi communication line, a mobile data communication line, and a satellite communication line are concurrently established, the information processing apparatus 101 preferentially uses the mobile data communication line. When both the Wi-Fi communication line and the mobile data communication line are connected to the Internet, the Wi-Fi communication line is preferentially used. Specifically, for example, when the information processing apparatus 101 is infrastructure-connected to the communication device 151 via the AP 131 connected to the Internet, and the Wi-Fi communication line, the mobile data communication line, and the satellite communication line are concurrently established, the information processing apparatus 101 preferentially uses the Wi-Fi communication line.

The information processing apparatus 101 is capable of controlling a line to be used for communication using an application of the information processing apparatus 101 by the OS receiving an instruction from the application. Specifically, the application of the information processing apparatus 101 performs a process called "bindProcessToNetwork" to notify the OS of a value indicating a line to be used for communication, thereby providing an instruction related to a line to be used for communication to the OS. In other words, the OS of the information processing apparatus 101 controls communication so that a line identified as a communication line connected to the Internet is used for communication that uses an application that does not perform the process called bindProcessToNetwork and does not provide an instruction related to a line to be used for communication to the OS. In other words, the OS of the information processing apparatus 101 identifies a line that is identified as a communication line connected to the Internet as a communication line to be used for communication via an application that has not provided an instruction related to a line to be used for communication to the OS. The OS of the information processing apparatus 101 controls communication so that a Wi-Fi communication line is used for communication via an application that has provided an instruction for using a Wi-Fi communication line to the OS by performing the process called bindProcessToNetwork and notifying the OS of a value indicating the Wi-Fi communication line as a value indicating a line to be used for communication, even when the Wi-Fi communication line is not connected to the Internet. In other words, the OS of the information processing apparatus 101 identifies a Wi-Fi communication line as a communication line to be used for communication via an application that has provided an instruction for using the Wi-Fi communication line to the OS.

The act of providing an instruction to the OS for using a Wi-Fi communication line is referred to as Wi-Fi binding. When Wi-Fi binding is executed by a particular application when the information processing apparatus 101 has established a plurality of connections via a plurality of communication lines, the state of the information processing apparatus 101 is such that a plurality of connections via a plurality of communication lines has been established, communication via a Wi-Fi communication line can be performed as communication via a particular application, but communication using a communication line other than a Wi-Fi communication line cannot be performed as communication via the particular application.

In the present embodiment, the predetermined application performs predetermined communication after performing Wi-Fi binding. This enables the predetermined application to perform communication with the communication device 151 even when a Wi-Fi communication line that is used for connection to the communication device 151 is not connected to the Internet.

However, when the information processing apparatus 101 has concurrently established a connection via the satellite communication line and a connection via the Wi-Fi communication line, the system may be controlled so that the satellite communication line is used for the communication via the predetermined application even when Wi-Fi binding is executed by the predetermined application. Furthermore, when the information processing apparatus 101 has concurrently established a connection via the satellite communication line and a connection via the Wi-Fi communication line, Wi-Fi communication with the communication device 151 via the predetermined application may become disabled even when Wi-Fi binding is executed by the predetermined application. This problem may occur, for example, when the OS of the information processing apparatus 101 controls the system to use a satellite communication line for communication, based on a control method executed by the OS of the information processing apparatus 101 and the radio wave environment surrounding the information processing apparatus 101.

Accordingly, in the present embodiment, specific control is performed when Wi-Fi communication with the communication device 151 cannot be performed even when Wi-Fi binding is executed by the predetermined application. The specific control is control for enabling Wi-Fi communication with the communication device 151 via the predetermined application, and for preventing the satellite communication line from being used for communication via the predetermined application. The specific control corresponds to the process from S812 to S815, described later. The specific control is, specifically, control for disabling the satellite communication function. When the satellite communication function is disabled by the specific control, the information processing apparatus 101 does not establish a connection via the satellite communication line. This can prevent the satellite communication line from being used for communication via the predetermined application.

Control performed in the present embodiment will be specifically described hereinbelow.

### Process Executed by Predetermined Application in Present Embodiment

In the present embodiment, the predetermined application executes Wi-Fi binding to perform communication with the communication device 151 via a Wi-Fi communication line, as described above. One example of the communication with the communication device 151 via a Wi-Fi communication line is communication for transmitting a print job or a copy job to the communication device 151. Another example is communication for transmitting a scan job to the communication device 151 and receiving image data obtained by scanning a document based on a scan job. Still another example of the communication with the communication device 151 via a Wi-Fi communication line is communication for setting a connection with the communication device 151.

### Connection Setting Process Executed by Predetermined Application in Present Embodiment

First, a process when communication for a connection setting process for the communication device 151 is performed as communication with the communication device 151 via a Wi-Fi communication line will be described. In the following description, the predetermined application is referred to as a first application, and a setting application for performing various settings for the information processing apparatus 101 is referred to as a second application. In the following, a screen for performing settings for the Wi-Fi connection of the information processing apparatus 101 among the various settings that can be executed by the second application is referred to as a Wi-Fi settings screen. The second application can display a list of access points located around the information processing apparatus 101 on the Wi-Fi settings screen. If a password is needed to connect to an access point selected from the list, the second application can receive input of the password from the user on the Wi-Fi settings screen. If the connection using the password has succeeded, the second application stores and manages various pieces of information of the access point connected by the information processing apparatus 101 using the password. Specific examples of the various pieces of information include the password, SSID, and security. In other words, the second application has a management function that manages and stores information of the access point to which the information processing apparatus 101 is currently connected and information of access points to which the information processing apparatus 101 has been connected in the past. With the management function, the second application can display, on the Wi-Fi settings screen, the password of the access point to which the information processing apparatus 101 is currently connected and the passwords of access points to which the information processing apparatus 101 has connected in the past. The user can confirm the correct password of the access point by confirming the password displayed by the second application. However, in order for the second application to display the password, several operations need to be performed on a screen displayed by the second application. Since the information processing apparatus 101 includes different second applications that differ depending on the OS or model of the information processing apparatus 101, an operation for displaying the password using the second application may vary depending on the OS or model of the information processing apparatus 101. If the user does not correctly recognize the operation, the user cannot display the password using the second application. For this reason, in the present embodiment, a screen that presents an operation for displaying the password via the second application is displayed.

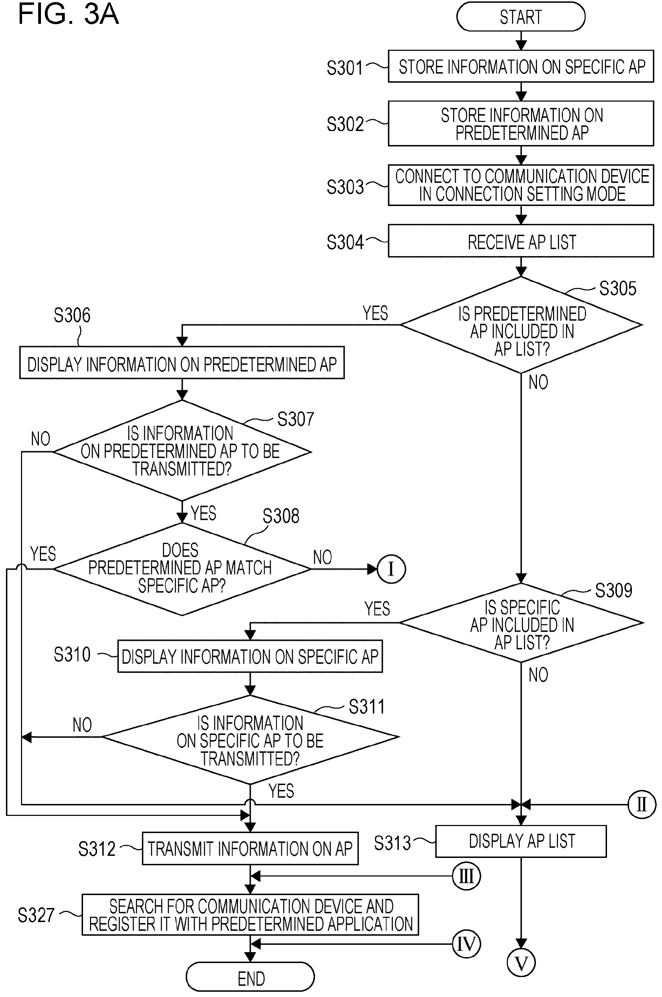

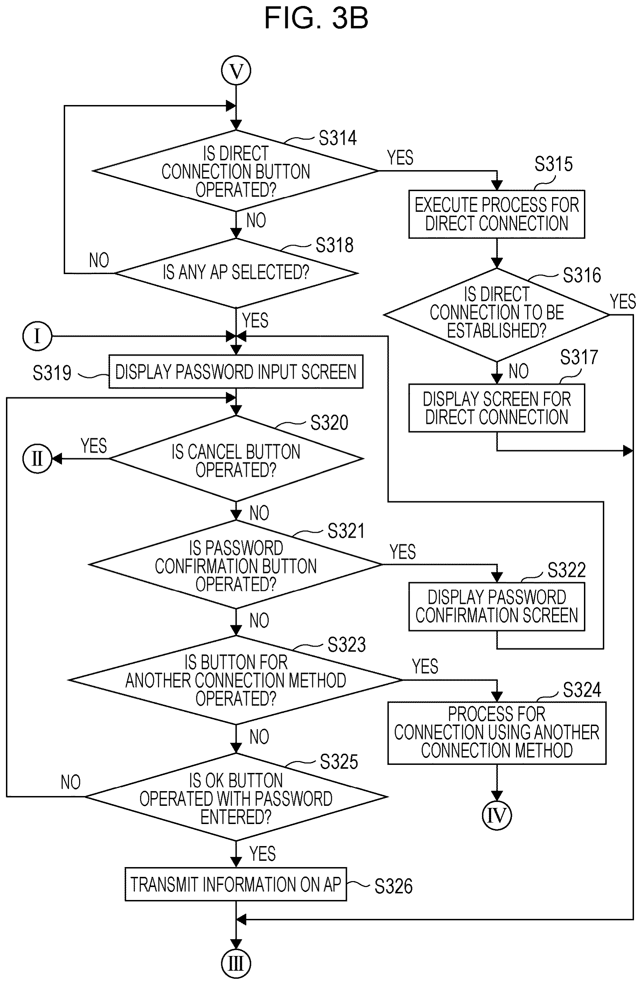

Figs. 3A and 3B illustrate a flowchart showing an example of a process executed by the information processing apparatus 101 by the first application in the present embodiment. The processes in the flowchart of Figs. 3A and 3B are implemented by, for example, the CPU 103 executing the first application, which has been loaded into the RAM 105 from a memory such as the ROM 104. The flowchart of Figs. 3A and 3B is started when an operation for executing the connection setting process is performed on a screen displayed by the first application. The flowchart of Figs. 3A and 3B may also be started when the first application is activated.

In S301, the first application acquires information on an AP to which the selected communication device 151 is currently connected via Wi-Fi from the communication device 151 and stores it. Hereinafter, the AP to which the selected communication device 151 is currently connected is referred to as a specific AP. The information on the specific AP acquired here includes the SSID and the password. The information on the specific AP is acquired via an infrastructure connection or a direct connection between the information processing apparatus 101 and the communication device 151. If the information processing apparatus 101 is currently uncommunicable with the selected communication device 151 or if the selected communication device 151 is not currently connected to the AP via Wi-Fi, the information on the specific AP is not acquired. The timing when the information on the specific AP is acquired is not limited to this timing. For example, the information on the specific AP may be acquired in response to the activation of the first application at a timing before the flowchart of Figs. 3A and 3B is started. In this configuration, the process of S301 is skipped.

In S302, the first application acquires the information on the AP to which the information processing apparatus 101 is currently connected via Wi-Fi from the OS and stores it. The AP to which the information processing apparatus 101 is currently connected via Wi-Fi is, in other words, an AP to which the information processing apparatus 101 is connected when a process that triggers the start of the flowchart of Figs. 3A and 3B is executed. The process that triggers the start of the flowchart of Figs. 3A and 3B is reception of an operation for executing the connection setting process or activation of the first application. Hereinafter, the AP to which the information processing apparatus 101 is connected via Wi-Fi at the timing of S301 is referred to as a predetermined AP. The AP information acquired here is part of various pieces of AP information that the first application can acquire from the OS. A specific example is the SSID. If the information processing apparatus 101 is not currently connected to the AP via Wi-Fi, the information on the predetermined AP is not acquired.

In S303, the first application executes a process for establishing a connection between the communication device 151 operating in the connection setting mode and the information processing apparatus 101. Specifically, the first application instructs the OS to establish a connection between the communication device 151 operating in the connection setting mode and the information processing apparatus 101. More specifically, the first application invokes a predetermined application programming interface (API) for establishing a connection to the information processing apparatus 101, while setting at least a part of the character string of the SSID of the communication device 151 operating in the connection setting mode as an argument. Then, the OS searches for a device having an SSID including the character string and establishes a connection between the discovered device (that is, the communication device 151 operating in the connection setting mode) and the information processing apparatus 101.

The communication device 151 to which the information processing apparatus 101 is connected through this process is a communication device 151 that is discovered first in the search executed by the process of S303. However, this configuration is illustrative only. Multiple communication devices 151 discovered through the search executed by the process of S303 may be displayed by the first application, and one of the multiple communication devices 151 selected by the user may be accepted. The communication device 151 to which the information processing apparatus 101 is connected through this process may be a communication device 151 selected by the user. While the connection between the communication device 151 operating in the connection setting mode and the information processing apparatus 101 is established, the communication between the communication device 151 and the information processing apparatus 101 is executed via the connection.

In the present embodiment, the first application for the iOS^{®} performs control so that the connection between the communication device 151 operating in the connection setting mode and the information processing apparatus 101 is the second type of connection. Specifically, in S303, the first application for the iOS^{®} sets a flag for instructing the OS to establish the second type of connection and invokes a predetermined API. This allows the OS to establish a connection between the communication device 151 operating in the connection setting mode and the information processing apparatus 101 as the second type of connection. As a result, even when a predetermined time has elapsed since the first application operates in the background, the connection between the communication device 151 operating in the connection setting mode and the information processing apparatus 101 is not disconnected. In the case where the OS of the information processing apparatus 101 is an Android^{®} OS, all of connections to the information processing apparatus 101 established in response to the instruction of the first application are the second type of connection. For this reason, in the case where the first application is an application for an Android^{®} OS, it is not necessary to set a flag for instructing the OS to establish the second type of connection.

In S304, the first application acquires information of the list of APs discovered through the search executed by the communication device 151 from the communication device 151. The APs discovered through the search executed by the communication device 151 are APs to which the communication device 151 can connect. The APs to which the communication device 151 can connect are APs that are located within the communication range of the communication device 151 and that support the capability of the communication device 151. For example, in the case where the communication device 151 is capable of communication via 2.4 GHz but incapable of communication via 5 GHz, the list of APs indicated by the acquired information includes APs that support communication via 2.4 GHz but does not include APs that support communication via 5 GHz.

In S305, the first application determines whether the list of APs indicated by the information acquired in S304 includes the AP (the predetermined AP) indicated by the information stored in S302. If the first application determines that the result is YES, the process proceeds to S306; if the determination result is NO, the process proceeds to S309.

In S306, the first application displays a confirmation screen that displays the information on the predetermined AP to prompt the user to confirm whether to set the predetermined AP as the connection target of the communication device 151. The information displayed here is the information stored in S302; for example, the SSID of the predetermined AP.

In S307, the first application determines whether to transmit the information on the predetermined AP to the communication device 151. In other words, this determination is a determination as to whether the user has confirmed that the connection target of the communication device 151 is the predetermined AP. Therefore, if an input indicating that the predetermined AP is set as the connection target of the communication device 151 is performed on the confirmation screen, the result is determined to be YES, and the predetermined AP is identified as the connection target of the communication device 151. If an input indicating that the predetermined AP is not set as the connection target of the communication device 151 is performed on the confirmation screen, the result is determined to be NO. If the first application determines that the result is YES, the process proceeds to S308; if the determination result is NO, the process proceeds to S313.

In S308, the first application determines whether the predetermined AP matches the specific AP. If the predetermined AP matches the specific AP, the first application is deemed to store the password of the predetermined AP. Therefore, this determination is a determination as to whether the first application stores the password of the predetermined AP. In other words, this determination is a determination as to whether the password of the predetermined AP is stored in a storage area to which the first application can refer. If the first application determines that the result is YES, the process proceeds to S312, where the information on the predetermined AP is transmitted to the communication device 151; if the determination result is NO, the process proceeds to S319, where a password input screen is displayed.

In S308, the determination as to whether the predetermined AP matches the specific AP does not necessarily have to be performed. The determination executed in S308 may be a determination as to whether the predetermined AP is an AP corresponding to the information stored in the storage area to which the first application can refer. In this configuration, one example of the case where the determination result is YES is a case where, in a past connection setting process executed by the first application, a password for connecting to the predetermined AP has been input to the first application by the user and transmitted to the communication device 151. In this configuration, one example of the case where the determination result is NO is a case where, in a past connection setting process executed by the first application, a password for connecting to the predetermined AP has not been input to the first application by the user.

In S309, which is executed when the determination result of S305 is NO, the first application determines whether the AP (specific AP) indicated by the information stored in S301 is included in the list of APs indicated by the information acquired in S304. If the first application determines that the result is YES, the process proceeds to S310; if the determination result is NO, the process proceeds to S313.

In S310, the first application displays a confirmation screen that displays the information on the specific AP to prompt the user to confirm whether to set the specific AP as the connection target of the communication device 151. The information displayed here is the information stored in S301; for example, the SSID of the specific AP.

In S311, the first application determines whether to transmit the information on the specific AP to the communication device 151. In other words, this determination is a determination as to whether the user has confirmed that the connection target of the communication device 151 is the specific AP. Therefore, if an input indicating that the specific AP is set as the connection target of the communication device 151 is performed on the confirmation screen, the result is determined to be YES, and the specific AP is identified as the connection target of the communication device 151. If an input indicating that the specific AP is not set as the connection target of the communication device 151 is performed on the confirmation screen, the result is determined to be NO. If the first application determines that the result is YES, the process proceeds to S312; if the determination result is NO, the process proceeds to S313.

In S312, the first application transmits information for connecting to the AP identified as the connection target of the communication device 151 to the communication device 151. The information transmitted here includes the SSID of the AP identified as the connection target of the communication device 151 and the password for connecting to the AP identified as the connection target of the communication device 151. In this process, the AP identified as the connection target of the communication device 151 is the predetermined AP that matches the specific AP or the specific AP. In other words, the password transmitted here is the password of the specific AP, which is acquired from the communication device 151 in S301. In other words, the password transmitted here is the password stored by the first application (the password stored in the storage area to which the first application can refer). Accordingly, after the connection target of the communication device 151 is identified, the first application transmits the password to the communication device 151 without receiving input of the password from the user. After the information for connecting to the AP identified as the connection target of the communication device 151 is transmitted to the communication device 151, the communication device 151 terminates the connection setting mode and connects to the AP identified as the connection target of the communication device 151 using the received information. As a result of the termination of the connection setting mode, the connection between the communication device 151 and the information processing apparatus 101 is disconnected. The information processing apparatus 101 reconnects to the predetermined AP, which is the AP to which the information processing apparatus 101 connected before connecting to the communication device 151, using the reconnecting function of the OS. Thereafter, the first application proceeds to S327. The first application may proceed to the process of displaying a screen for searching for the communication device 151 on a Wi-Fi network to which the information processing apparatus 101 is connected, as in S710 described later, rather than proceeding to S327.

The process of S313 is executed when the determination result of S307 is NO, when the determination result of S309 is NO, when the determination result of S311 is NO, or when the determination result of S320 is YES. In S313, the first application displays the list of APs indicated by the information acquired in S304. In the present embodiment, the screen including the list includes a direct-connection button. If the list does not include an AP that the user desires as the connection target of the communication device 151, the user operates the direct-connection button.

In S314, the first application determines whether the direct-connection button has been operated. If the first application determines that the result is YES, the process proceeds to S315; if the determination result is NO, the process proceeds to S318.

In S315, the first application executes a process for establishing a direct connection between the communication device 151 and the information processing apparatus 101. Specifically, the first application first transmits direct setting information to the communication device 151. The first application acquires connection information for directly connecting to the communication device 151. The first application instructs the OS to establish a connection between the communication device 151 operating in the direct connection mode and the information processing apparatus 101. More specifically, the first application identifies the SSID of the communication device 151 operating in the direct connection mode from the received connection information. The first application invokes a predetermined API for establishing a connection to the information processing apparatus 101, while setting at least a part of the character string of the identified SSID as an argument. Then, the OS searches for a device having an SSID including the character string and displays a confirmation screen for confirming whether to establish a direct connection between the discovered device (the communication device 151 operating in the direct connection mode) and the information processing apparatus 101. If the first application is an application for the iOS^{®}, in this process, the first application may invoke a predetermined API, while setting a flag for instructing the OS to establish a connection that is not disconnected even when the first application has transitioned to the background. In other words, the direct connection between the communication device 151 and the information processing apparatus 101 may be established as the second type of connection. However, this configuration is illustrative only. In this process, the first application may invoke the predetermined API without setting the flag and establish the direct connection between the communication device 151 and the information processing apparatus 101 as the first type of connection.

In S316, the first application determines whether a user action to establish a direct connection has been performed on the confirmation screen displayed by the OS in S315. This determination is executed when the first application receives a notification from the OS indicating what operation has been performed on the confirmation screen displayed by the OS. If a user action to establish a direct connection is performed, the OS establishes a direct connection. In contrast, if a user action not to establish a direct connection is performed, the OS does not establish a direct connection. If the first application determines that the result is YES, the process proceeds to S327; if the determination result is NO, the process proceeds to S317.

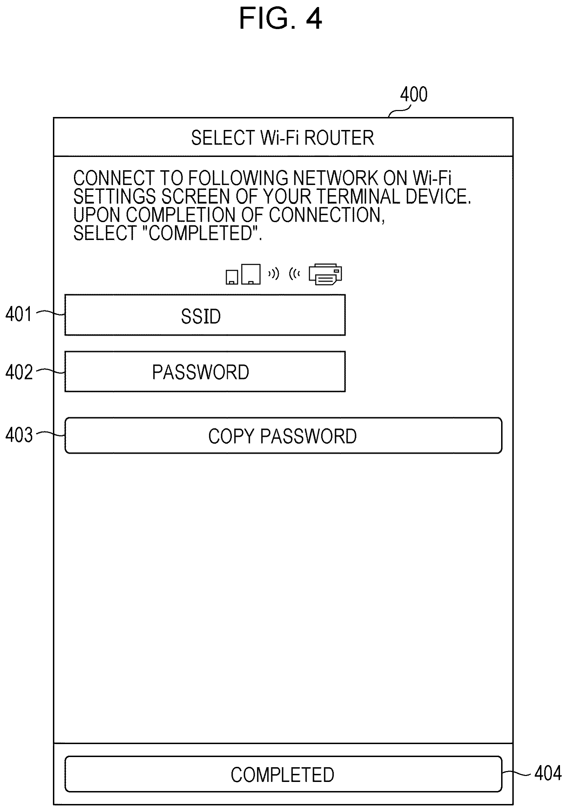

In S317, the first application displays a screen for a direct connection. One example of the screen displayed in this process is illustrated in Fig. 4. A screen 400 includes an SSID display area 401, a password display area 402, a password copy area 403, and a Complete button 404. The SSID display area 401 is configured to display the SSID of the communication device 151 operating in the direct connection mode. The password display area 402 is configured to display the password of the communication device 151 operating in the direct connection mode. When the area 403 is operated, the first application copies the password of the communication device 151 operating in the direct connection mode and stores the password in the clipboard of the information processing apparatus 101. Copying the password of the communication device 151 operating in the direct connection mode allows the user to easily input the password in the second application, thereby establishing a direct connection via the second application. The screen 400 may include a message prompting the user to establish a direct connection on a Wi-Fi settings screen displayed by the second application and a message prompting the user to press the Complete button 404 upon successful establishment of the direct connection. When the Complete button 404 is pressed, the first application proceeds to S327. The process may proceed to a process for displaying a screen for searching for the communication device 151 on a Wi-Fi network to which the information processing apparatus 101 is connected, as in S710 described later, rather than proceeding to S327.

In S318, which is executed when the determination result of S314 is NO, the first application determines whether any AP from the displayed AP list has been selected by the user. If the determination result is YES, the first application identifies the selected AP as the connection target of the communication device 151 and proceeds to S319; if the determination result is NO, the process returns to S314, where the first application waits for any operation.

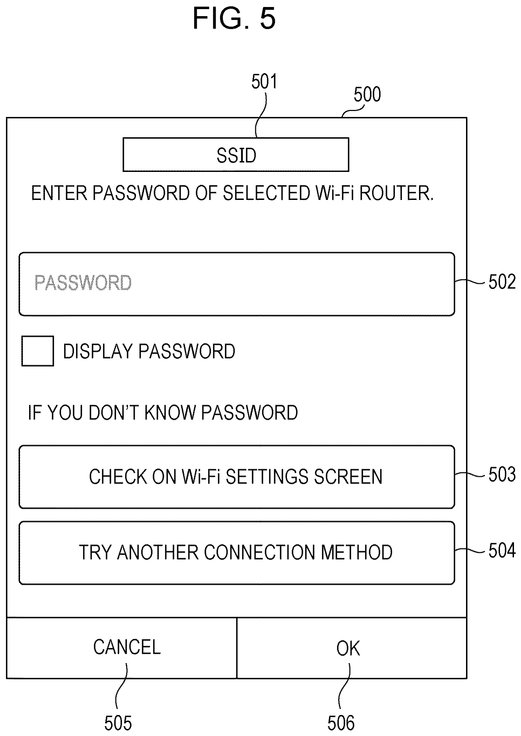

In S319, the first application displays a password input screen configured to receive a password for connecting to the AP identified as the connection target of the communication device 151 (first display control). The password input screen may be displayed as a pop-up on top of the AP list. One example of the screen displayed in this process is illustrated in Fig. 5. A password input screen 500 includes an SSID display area 501, a password input box 502 (a first area), a password confirmation button 503, a button 504 for another connection method, an OK button 505, and a Cancel button 506. The SSID display area 501 is an area that displays the SSID of an AP identified as the connection target of the communication device 151. The password input box 502 is configured to accept user input of the password of the AP identified as the connection target of the communication device 151. The password confirmation button 503 is a button relating to the function to display the password on the Wi-Fi settings screen via the second application. The button 504 for another connection method is a button for displaying a manual for another connection method. In the present embodiment, another connection method refers to a connection method different from the method in which the first application transmits setting information to the communication device 151 to establish a connection between the communication device 151 and another device. In other words, another connection method is a method for establishing a connection between the communication device 151 and another device without the first application transmitting setting information to the communication device 151.

Depending on the version of the OS of the information processing apparatus 101, the second application may be unable to display the password of an access point to which the information processing apparatus 101 is currently connected and the password of an access point to which the information processing apparatus 101 has connected in the past on the Wi-Fi settings screen. Specifically, if the OS of the information processing apparatus 101 is an Android^{®} OS earlier than Android^{®} OS version 10, an OS earlier than iOS^{®} version 16, or an OS earlier than iPadOS^{®} version 16, the second application cannot display the password on the Wi-Fi settings screen. For this reason, in S319, the first application may identify the version of the OS of the information processing apparatus 101 and determine whether the identified version is a version in which the second application is unable to display the password on the Wi-Fi settings screen. If the determination result is YES, the first application may display a password input screen not including the password confirmation button 503; if the determination result is NO, the first application may display a password input screen including the password confirmation button 503. The password input screen not including the password confirmation button 503 includes the other buttons and areas on the screen 500. In other words, the button 504 for another connection method is displayed regardless of the version of the OS. For example, if the first application supports only an OS of a version in which the second application can display the password on the Wi-Fi settings screen, the determination of the version and the control to switch the display screens based on the determination result of the version may be omitted.

In S320, the first application determines whether a user action on the Cancel button 506 has been accepted. If the first application determines that the result is YES, the process proceeds to S313 and displays the AP list; if the determination result is NO, the process proceeds to S321.

In S321, the first application determines whether a user action on the password confirmation button 503 has been accepted. If the first application determines that the result is YES, the process proceeds to S322; if the determination result is NO, the process proceeds to S323.

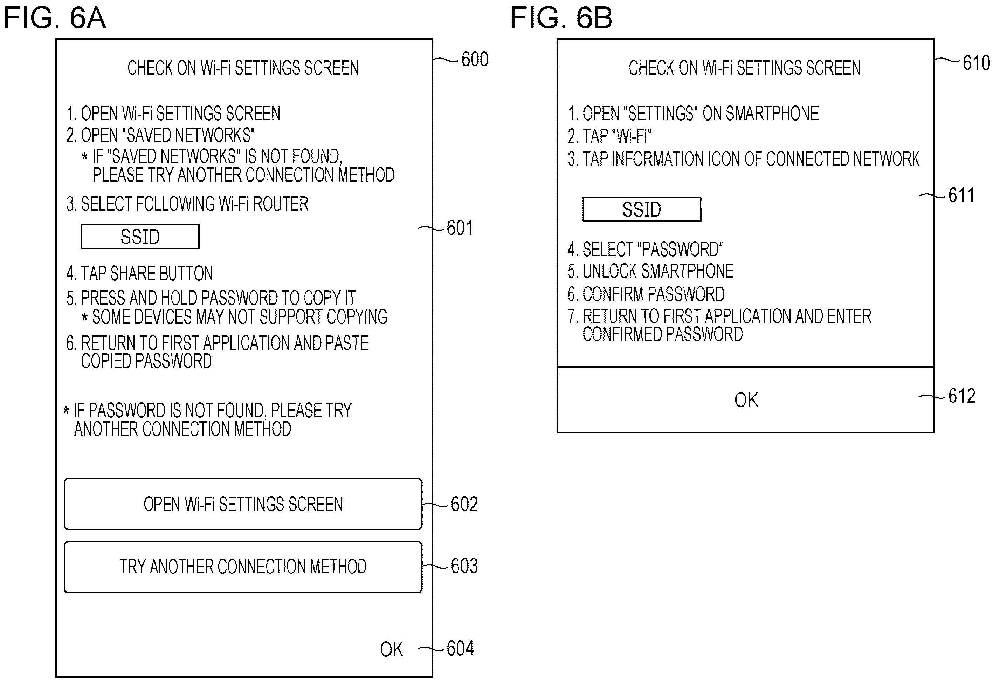

In S322, the first application displays a screen for confirming the password. In the present embodiment, a password confirmation screen is a predetermined screen that presents a method for confirming the password of the AP on the Wi-Fi settings screen displayed by the second application. One example of the screen displayed in this process is illustrated in Figs. 6A and 6B. In the present embodiment, the password confirmation screen is not a web page displayed by a web browser via Internet communication. In other words, the screen is displayed in the first application in accordance with information stored in the first application. Examples of web browsers include an internal browser of the first application and the browser of a browser application different from the first application. However, this configuration is illustrative only; the password confirmation screen may be a web page displayed by a web browser. The password confirmation screen may be displayed as a pop-up on top of the AP list.

Fig. 6A illustrates a password confirmation screen displayed when the OS of the information processing apparatus 101 is an Android^{®} OS, and the first application is an application for the Android^{®} OS. A screen 600 includes an area 601 that presents a method for confirming the password of the AP on a Wi-Fi settings screen displayed by the second application compatible with the Android^{®} OS (hereinafter referred to as a first password confirmation method), a button 602 that causes the second application to display the Wi-Fi settings screen, a button 603 for another connection method, and an OK button 604. The area 601 displays a description of an operation for confirming the password on the Wi-Fi settings screen compatible with the Android^{®} OS as a description of the first password confirmation method. Specific examples include a message to open the Wi-Fi settings screen, a message to select a wireless LAN router (Wi-Fi router) activating an AP identified as the connection target of the communication device 151, and a message to tap a share button for displaying the password of the selected router on the Wi-Fi settings screen. The area 601 may display the SSID of the AP identified as the connection target of the communication device 151. The SSID of the AP identified as the connection target of the communication device 151 is, in other words, the SSID of the AP corresponding to the password, which is the confirmation target on the Wi-Fi settings screen. The area 601 also displays a message to copy the password displayed on the Wi-Fi settings screen and a message to paste the copied password back to the first application. The area 601 may also display a message prompting the user to return to the first application after confirming the password, (to cause the first application to re-transition to the foreground). Depending on the type of the information processing apparatus 101, a function for confirming the password on the Wi-Fi settings screen or a function for copying the password displayed on the Wi-Fi settings screen may not be installed. The type of the information processing apparatus 101 is, for example, the type of an Android^{®} terminal. For this reason, the screen 600 may include a message indicating the same. The screen 600 may include a message prompting the user to try another connection method when the password cannot be confirmed on the Wi-Fi settings screen. If the button 602 is operated, the second application is activated, and a process for causing the second application to display the Wi-Fi settings screen is executed. If the Wi-Fi settings screen is displayed, the first application transitions to the background. If a Back button of the information processing apparatus 101 is operated on the screen displayed by the second application, the first application re-transitions to the foreground. If the button 603 is operated, the first application proceeds to S324. If the OK button 604 is operated, the first application proceeds to S319.

Fig. 6B illustrates a password confirmation screen displayed when the OS of the information processing apparatus 101 is an iOS^{®} or iPadOS^{®}, and the first application is an application for the iOS^{®} or an application for the iPadOS^{®}. A screen 610 includes an area 611 that presents a method for confirming the password of the AP on a Wi-Fi settings screen displayed by the second application compatible with the iOS^{®} or iPadOS^{®} (hereinafter referred to as a second password confirmation method), and an OK button 612. The area 611 displays a description of an operation for confirming the password on a Wi-Fi settings screen compatible with the iOS^{®} or iPadOS^{®} as a description of the second password confirmation method. The screen 610 may display the SSID of an AP identified as the connection target of the communication device 151. The area 611 may also display a message prompting the user to return to the first application after confirming the password (to cause the first application to re-transition to the foreground). The user, after confirming the messages, activates the second application via the home screen or the like of the information processing apparatus 101 and executes the operation indicated by the messages to confirm the password. After confirming the password, the user operates the first application in the foreground, operates the button 612 to input the password in the first application. All terminal devices equipped with a predetermined version or later of an iOS^{®} or iPadOS^{®} are equipped with a function for confirming the password on the Wi-Fi settings screen. For this reason, the screen 610 does not include a button for another connection method, unlike the screen 600. However, this configuration is illustrative only; the screen 610 may also include a button for another connection method. In a terminal device equipped with the iOS^{®} or iPadOS^{®}, the second application cannot be launched in response to an instruction from the first application. For this reason, the screen 610 does not include a button for displaying the Wi-Fi settings screen, unlike the screen 600. However, this configuration is illustrative only; even in a terminal device equipped with the iOS^{®} or iPadOS^{®}, if the second application can be launched in response to an instruction from the first application, the screen 610 may also include a button for displaying the Wi-Fi settings screen. When the button 612 is operated, the first application proceeds to S319. In the present embodiment, the description of the first password confirmation method and the description of the second password confirmation method differ. However, this configuration is illustrative only; the description of the first password confirmation method and the description of the second password confirmation method may be the same.

In S323, which is executed when the determination result of S321 is NO, the first application determines whether a user action on the button for another connection method has been accepted. If the first application determines that the result is YES, the process proceeds to S324; if the determination result is NO, the process proceeds to S325.

In S324, the first application transmits information for instructing the communication device 151 to terminate the process in the connection setting mode. In response to it, the communication device 151 terminates the connection setting mode and restarts the operation in the mode before the connection setting mode. Due to the termination of the connection setting mode, the connection between the communication device 151 and the information processing apparatus 101 is also disconnected. The information processing apparatus 101 reconnects to the predetermined AP, to which the information processing apparatus 101 was connected before connecting to the communication device 151, using the reconnecting function of the OS. The first application executes a process for displaying a manual for initial setup operations for the communication device 151. Specifically, the first application displays a web page that displays a manual for initial setup operations for the communication device 151 via an internal browser (an in-app browser) of the first application. Information for displaying the web page is acquired from a predetermined server via a connection to the Internet. Accordingly, if the communication device 151 is connected to the Internet, the web page is successfully displayed. The manual for the initial setup operations for the communication device 151 may be displayed by the first application as content originally incorporated in the first application without using a browser, rather than being displayed as a web page acquired via the Internet. The screen displayed by the internal browser of the first application is closed when a Close button on the screen is operated by the user. Thereafter, the first application displays a search screen for searching for the communication device 151 on the Wi-Fi network to which the information processing apparatus 101 is connected. The search screen includes a button for instructing the user to start to search for the communication device 151 on the Wi-Fi network to which the information processing apparatus 101 is connected. When the button is pressed, the first application searches for the communication device 151 on the Wi-Fi network to which the information processing apparatus 101 is connected and displays a list of communication devices 151 discovered by the search. The first application displays only a communication device 151 corresponding to the first application among the multiple communication devices 151 discovered through the search. The communication device 151 corresponding to the first application is a communication device 151 provided by the vendor of the first application. The search may be configured such that only the communication device 151 provided by the vendor of the first application is discovered, and communication devices 151 provided by other vendors are not discovered. When one of the listed communication devices 151 displayed is selected, the first application acquires information on the selected communication device 151 from the selected communication device 151 via the Wi-Fi network to which the information processing apparatus 101 is connected. Then, the first application registers the selected communication device 151 with the first application. Thereafter, the first application terminates the process of this flowchart.

In S325, the first application determines whether a user action on the OK button 505 has been accepted, with the password being input to the password input box 502. The user may, after operating the button 503 to confirm the password on the Wi-Fi settings screen according to the description displayed on the screen of Fig. 6A or 6B, input the password into the password input box 502. If the user has copied the password on the Wi-Fi settings screen and stored it in a clipboard, the user may input the stored password by pasting it in the password input box 502. If the first application determines that the result is YES, the process proceeds to S326; if the determination result is NO, the process returns to S320 and waits for a user action on the password input screen 500.

In S326, the first application transmits information for connecting to the AP identified as the connection target of the communication device 151 to the communication device 151. The information transmitted here includes, specifically, the password input to the password input box 502 and the SSID of the AP identified as the connection target of the communication device 151. After the information for connecting to the AP identified as the connection target of the communication device 151 is transmitted to the communication device 151, the communication device 151 terminates the connection setting mode and connects to the AP identified as the connection target of the communication device 151 using the received information. Due to the termination of the connection setting mode, the connection between the communication device 151 and the information processing apparatus 101 is also disconnected. The information processing apparatus 101 reconnects to the predetermined AP, which is the AP to which the information processing apparatus 101 was connected before connecting to the communication device 151, using the reconnecting function of the OS. Thereafter, the first application proceeds to S327.

In S327, the first application searches for the communication device 151 on the Wi-Fi network to which the information processing apparatus 101 is connected. For example, if the AP identified as the connection target of the communication device 151 is the predetermined AP, both the communication device 151 and the information processing apparatus 101 are connected to the predetermined AP, and therefore, the communication device 151 is discovered by this search. If the AP identified as the connection target of the communication device 151 is an AP different from the predetermined AP, and the communication device 151 is connected to the AP different from the predetermined AP, or if the communication device 151 has failed to connect to the AP due to an incorrect password being entered, the communication device 151 is not discovered by this search. If the communication device 151 is discovered by this search, information on the communication device 151 is acquired from the communication device 151 via the Wi-Fi network to which the information processing apparatus 101 is connected, and the communication device 151 is registered with the first application. At that time, the first application may automatically set the newly registered communication device 151 as the selected communication device 151. Thereafter, the first application terminates the process and displays the home screen of the first application.

Thus, in the present embodiment, in the connection setting process, the first application performs communication with the communication device 151 in S312, S315, and S326.

### Job Transmission Process Executed by Predetermined Application in Present Embodiment

Next, a process for transmitting a job to the communication device 151 will be described as communication with the communication device 151 via a Wi-Fi communication line. Here, a print job is exemplified as a job to be transmitted to the communication device 151. However, this configuration is illustrative only. A scan job, a copy job, a setting job for changing various settings of the communication device 151, a status acquisition job for acquiring status from the communication device 151, or any other job transmission process may be applied to communication with the communication device 151 via a Wi-Fi communication line.

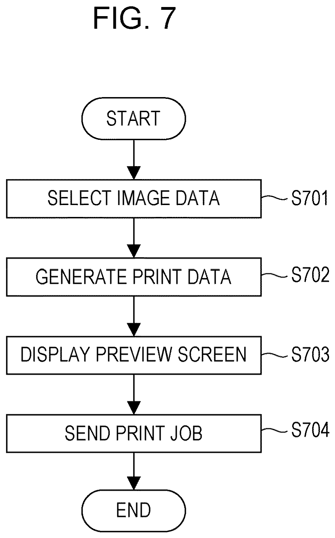

Fig. 7 is a flowchart illustrating an example of a process executed by the information processing apparatus 101 by the first application in the present embodiment. The processes of the flowchart of Fig. 7 are implemented by, for example, the CPU 103 executing the first application, which has been loaded into the RAM 105 from a memory such as the ROM 104. The flowchart of Fig. 7 is started when an operation for executing a function for transmitting a print job is performed on a screen displayed by the first application.

In S701, the first application accepts a selection of image data to be printed from the user. In a specific example, the first application displays, as candidates for image data to be printed, a list of a plurality of pieces of image data in the form of thumbnails. One example of candidates for image data to be printed is image data stored in a memory of the information processing apparatus 101. In this configuration, the first application acquires image data selected as image data to be printed from the memory of the information processing apparatus 101. Another example of candidates for image data to be printed is image data managed by a social network service (SNS). In this configuration, for example, the first application displays a screen showing a plurality of SNSs and accepts a selection of one of the SNSs from the user. The first application initiates communication with an external server corresponding to the selected SNS via the Internet. Therefore, for example, the first application does not execute Wi-Fi binding at the timing of S701. The first application may execute a process for cancelling Wi-Fi binding before S701. The first application receives, from the user, an operation for logging in to the user's account and executes communication for logging in to the user's account with an external server corresponding to the user's account. When the log-in has succeeded, the first application acquires information for displaying thumbnails of image data that is managed by the selected SNS and associated with the user's account. The first application displays a list of a plurality of pieces of image data, which are candidates for image data to be printed, in the form of thumbnails using the acquired information. When one of the thumbnails is selected and, as a result, image data to be printed is selected, the first application receives the image data selected as image data to be printed from an external server corresponding to the selected SNS. In this manner, the image data selected as image data to be printed is acquired by the first application.

In S702, the first application generates print data for causing the communication device 151 to print an image based on the acquired image data, by performing various conversion and image processing operations on the acquired image data.

In S703, the first application displays a preview screen for previewing an image based on the acquired image data. The preview screen includes a region for changing print settings and a button for transmitting a print job. When the button for transmitting a print job is pressed, the process proceeds to S704.

In S704, the first application transmits a print job including the generated print data and print settings to the communication device 151.

Thus, in the present embodiment, the first application performs, in the process of transmitting a print job, communication with the communication device 151 in S704. A process for transmitting another job is also performed when an operation for transmitting the job is executed by the first application.

### Communication Process Executed by Predetermined Application in Present Embodiment

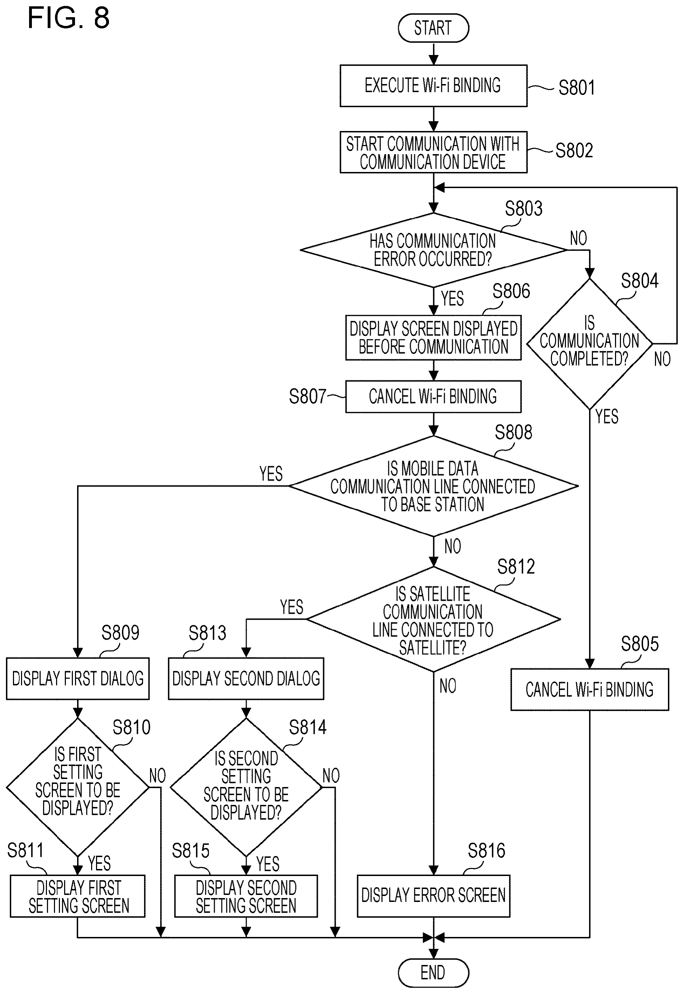

Fig. 8 is a flowchart illustrating an example of a process executed by the information processing apparatus 101 by the first application in the present embodiment. The processes of the flowchart of Fig. 8 are implemented by, for example, the CPU 103 executing the first application, which has been loaded into the RAM 105 from a memory such as the ROM 104. When a trigger for communication with the communication device 151 is generated in the first application, the flowchart of Fig. 8 is started. Examples of the communication with the communication device 151 include the processes of S312, S315, and S326 in the connection setting process and the process of S704 in the print job transmission process. Still another example of the communication with the communication device 151 is transmission of another job other than the print job.

In S801, the first application executes Wi-Fi binding.

In S802, the first application instructs the OS to start communication with the communication device 151 via a Wi-Fi communication line. As a result, communication with the communication device 151 is started using a Wi-Fi communication line. Examples of the communication with the communication device 151 performed here are as described above. The first application may also display a screen indicating that communication with the communication device 151 is in progress.

In S803, the first application determines whether an error has occurred in the communication with the communication device 151 via a Wi-Fi communication line. If the first application determines that the result of YES in this determination, the process proceeds to S806; if NO is determined, the process proceeds to S804.

In S804, the first application determines whether the communication with the communication device 151 via a Wi-Fi communication line has been completed. If this process is performed in S312, the first application determines that the communication with the communication device 151 via a Wi-Fi communication line has been completed when transmission of information of a predetermined AP has been completed. If this process is performed in S315, the first application determines that the communication with the communication device 151 via a Wi-Fi communication line has been completed when transmission of direct setting information and acquisition of connection information for establishing a direct-connection to the communication device 151 has been completed. If this process is performed in S326, the first application determines that the communication with the communication device 151 via a Wi-Fi communication line has been completed when transmission of information for connecting to an AP identified as the connection target of the communication device 151 has been completed. If this process is performed in S704, the first application determines that the communication with the communication device 151 via a Wi-Fi communication line has been completed when transmission of a print job has been completed. The first application may acquire print status based on the print job after transmission of the print job has been completed. The first application may determine that the communication with the communication device 151 via a Wi-Fi communication line has been completed when printing based on the print job is completed in the communication device 151 and the acquisition of the print status based on the print job has been completed in the first application.

In S805, the first application cancels the Wi-Fi binding. As a result, communication according to an instruction from the first application uses a line identified as a communication line connected to the Internet. Thereafter, the process of this flowchart is ended.

In S806, which is performed when the determination result of S803 is YES, the first application displays a screen displayed before the communication with the communication device 151 is initiated in S802.

In S807, the first application cancels the Wi-Fi binding.

In S808, the first application determines whether a mobile data communication line is connected to a base station. This determination corresponds to a process of determining whether the mobile data communication line is connected to the Internet. A state in which the communication line is connected to the base station refers to a state in which radio waves emitted from the base station are being received, and data can be transmitted to and received from the base station. If a mobile data communication function is disabled in the information processing apparatus 101, the result of this determination is NO. If the mobile data communication function is enabled in the information processing apparatus 101, but the mobile data communication line is not connected to the base station, the result of this determination is NO. If the mobile data communication function is enabled in the information processing apparatus 101, and the mobile data communication line is connected to the base station, the result of this determination is YES. This determination is performed based on information indicating whether the mobile data communication line is connected to the base station, the information being acquired by the first application by calling an API for acquiring the information from the OS. This determination is not limited to the above-described configuration and may be a process of determining whether the mobile data communication function is enabled in the information processing apparatus 101. This determination is performed based on information indicating whether the mobile data communication function is enabled in the information processing apparatus 101, the information being acquired by the first application by calling an API for acquiring the information from the OS. If the first application determines that the result is YES, the process proceeds to S809; if NO is determined, the process proceeds to S812.

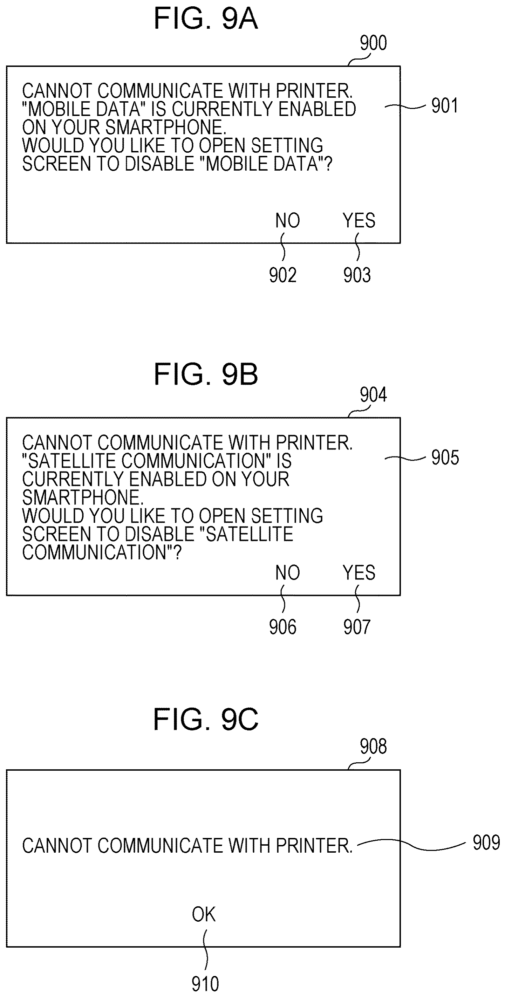

In S809, the first application displays a first dialog 900, which is a screen for prompting the user to disable the mobile data communication function. One example of the first dialog 900 is illustrated in Fig. 9A. The first dialog 900 includes a message 901 that indicates that the mobile data communication function is enabled and prompts the user to disable the mobile data communication function. The message 901 may include a message that prompts the user to determine whether to display a first setting screen for changing the setting of the mobile data communication function. One example of the first setting screen is a screen displayed by the second application.

The first dialog 900 may include a button 902 for selecting not to display the first setting screen and a button 903 for selecting to display the first setting screen.

In S810, the first application determines whether to display the first setting screen. This process is a process of determining whether the button 903 or the button 902 has been operated. If the first application determines that the result is YES in response to an operation on the button 903, the process proceeds to S811. If the first application determines that the result is NO in response to an operation on the button 902, the first application terminates the process of this flowchart.

In S811, the first application activates the second application to cause the second application to display the first setting screen. This causes the first application to transition to the background. Thereafter, the first application terminates the process of this flowchart. When an operation for returning from the second application to the first application is performed, and the first application transitions to the foreground, the screen displayed in S806 is displayed again by the first application, and the processes following step S806 of this flowchart are executed by the first application.

In S812, which is performed when the result of the determination in S808 is NO, the first application determines whether the satellite communication line is connected to a satellite. A state in which the satellite communication line is connected to a satellite refers to a state in which radio waves emitted from the satellite are received, and data can be transmitted to and received from the satellite. If a satellite communication function is disabled in the information processing apparatus 101, the result of this determination is NO. If the satellite communication function is enabled in the information processing apparatus 101, but the satellite communication line is not connected to a satellite, the result of this determination is NO. If the satellite communication function is enabled in the information processing apparatus 101, and the satellite communication line is connected to a satellite, the result of this determination is YES. This determination is performed based on information indicating whether the satellite communication line is connected to a satellite, the information being acquired by the first application by calling an API for acquiring the information from the OS. A specific example of the API is ServiceState.isUsingNonTerrestrialNetwork(). This determination is not limited to the above-described configuration and may be a process of determining whether the satellite communication function is enabled in the information processing apparatus 101. This determination is performed based on information indicating whether the satellite communication function is enabled in the information processing apparatus 101, the information being acquired by the first application by calling an API for acquiring the information from the OS. If the first application determines that the result is YES, the process proceeds to S813; if the result is NO, the process proceeds to S816. If the information processing apparatus 101 does not include the satellite communication unit 114, or if the information processing apparatus 101 includes the satellite communication unit 114, but is controlled not to perform satellite communication using the satellite communication unit 114, depending on its model or market destination, the result of this determination is NO.

In S813, the first application displays a second dialog 904, which is a screen for prompting the user to disable the satellite communication function. One example of the second dialog 904 is illustrated in Fig. 9B. The second dialog 904 includes a message 905 that indicates that the satellite communication function is enabled and prompts the user to disable the satellite communication function. The message 905 may include a message that prompts the user to determine whether to display a second setting screen for changing the setting of the satellite communication function. One example of the second setting screen is a screen displayed by the second application. The second dialog 904 may include a button 906 for selecting not to display the second setting screen and a button 907 for selecting to display the second setting screen.

In S814, the first application determines whether to display the second setting screen. This process is a process of determining whether the button 907 or the button 906 has been operated. If the first application determines that the result is YES in response to an operation on the button 907, the process proceeds to S815. If the first application determines that the result is NO in response to an operation on the button 906, the first application terminates the process of this flowchart.

In S815, the first application activates the second application to cause the second application to display the second setting screen. This causes the first application to transition to the background. Thereafter, the first application terminates the process of this flowchart. When an operation for returning from the second application to the first application is performed, and the first application transitions to the foreground, the screen displayed in S806 is displayed again by the first application, and the processes following step S806 of this flowchart are executed by the first application.

In S816, which is performed when the result of the determination in S812 is NO, the first application displays an error screen 908 indicating that communication with the communication device 151 is disabled. One example of the error screen 908 is illustrated in Fig. 9C. The error screen 908 includes a message 909 indicating that communication with the communication device 151 is disabled and a button 910 for closing the error screen. The error screen 908 may include a button for displaying a screen indicating a method for resolving an error in which communication with the communication device 151 is not possible. When the button is pressed, the first application may perform a process of identifying a cause of an error in which communication with the communication device 151 is not possible with reference to the radio wave condition of the information processing apparatus 101 and the information of the AP to which the information processing apparatus 101 is connected. A screen based on the cause identified by the process may be displayed as a screen indicating a method for resolving the error in which communication with the communication device 151 is not possible. When the button 910 is operated, the first application terminates the process of this flowchart.

With this configuration, the first application can prevent a mobile data communication line or a satellite communication line from being used for communication by the predetermined application. Accordingly, the first application can more reliably perform Wi-Fi communication with the communication device 151.

### Other Embodiments

In embodiments, Wi-Fi communication with the communication device 151 is performed for communication for a connection setting process and for transmission of jobs. However, the present disclosure is not limited to such configurations. The Wi-Fi communication with the communication device 151 may be performed for any processes. For example, in a case where the communication device 151 is not a printer, Wi-Fi communication with the communication device 151 is performed for processes other than transmission of jobs.

In embodiments, the process of S808 to S811 is performed as a process for preventing the mobile data communication line from being used for communication by the predetermined application. However, the present disclosure is not limited to such a configuration. It is also possible to adopt a configuration in which no process is performed to prevent the mobile data communication line from being used for communication by the predetermined application. Specifically, the first application may proceed to S812 without performing S808 after S807.

In embodiments, the process for preventing the mobile data communication line from being used for communication by the predetermined application is performed before the process of S812 to S815, which is performed to prevent the satellite communication line from being used for communication by the predetermined application. However, the present disclosure is not limited to such a configuration. The former process may be performed after the latter process. Specifically, the first application may proceed to S812 without performing S808 after S807. The first application may proceed to S808 when the result of the determination in S812 is NO. The first application may proceed to S816 when the result of the determination in S808 is NO.

In embodiments, the first dialog or the second dialog is displayed after it is determined in S808 or S812 whether the mobile data communication line is connected to the base station for mobile data communication or whether the satellite communication line is connected to a satellite. However, the present disclosure is not limited to such a configuration. The first dialog or the second dialog may be displayed without performing the above determination. Specifically, the first application may proceed to S816 without executing S808 or S812 after S807. The screen displayed in S816 may include the details included in the first dialog or the second dialog.

In embodiments, Wi-Fi binding is executed when a trigger for communication with the communication device 151 is generated. However, the present disclosure is not limited to such a configuration. The Wi-Fi binding may be executed before a trigger for communication with the communication device 151 is generated. Specifically, for example, the Wi-Fi binding may be executed immediately after the first application is activated. For example, the Wi-Fi binding may be executed after an operation for executing a function for transmitting a print job and before step S704 is executed. For example, the Wi-Fi binding may be performed after an operation for executing a connection setting process and before S312, S315, or S326 is executed.

In embodiments, the process for preventing the satellite communication line from being used for communication by the predetermined application is performed after Wi-Fi binding is executed. However, the present disclosure is not limited to such a configuration. The process for preventing the satellite communication line from being used for communication by the predetermined application may be performed without executing Wi-Fi binding. Specifically, for example, the first application may not execute S801, S805, or S807 in the flowchart of Fig. 8.

In embodiments, Wi-Fi binding is executed by the predetermined application. However, the present disclosure is not limited to such a configuration. An instruction to use a communication line using a communication scheme other than Wi-Fi may be provided from the predetermined application to the OS. The process via a Wi-Fi communication line in the above embodiment may use a communication line using a communication scheme other than Wi-Fi. In other words, the process of S808 to S815 may be executed in the process for executing communication using a communication line using a communication scheme other than Wi-Fi.

A specific example of the communication scheme other than Wi-Fi is Bluetooth.

The present disclosure includes the following example configurations.

### Item 1

A predetermined application program which,
when the program is executed by a computer of an information processing apparatus capable of executing communication using a satellite communication line and communication using a predetermined communication line different from the satellite communication line, causes the computer to execute:
an execution step of executing a process for communication with a communication device using the predetermined communication line; and
a first control step of executing specific control to disable a satellite communication function for executing communication using the satellite communication line in the information processing apparatus, in response to an occurrence of an error in the communication with the communication device using the predetermined communication line, the communication using the predetermined communication line being initiated upon execution of the process by the predetermined application program.

### Item 2

The program according to Item 1, further causing the computer to execute:
a determination step of executing a determination regarding the satellite communication line in response to an occurrence of an error in the communication with the communication device using the predetermined communication line initiated upon execution of the process by the predetermined application program,
wherein, when a result of the determination regarding the satellite communication line is a first result, the specific control is executed, and when the result of the determination regarding the satellite communication line is a second result, the specific control is not executed.

### Item 3

The program according to Item 2,
wherein the determination regarding the satellite communication line is a determination whether the satellite communication line is connected to a satellite, and
wherein, when it is determined that the satellite communication line is connected to a satellite, the specific control is executed, and when it is determined that the satellite communication line is not connected to a satellite, the specific control is not executed.

### Item 4

The program according to Item 2,
wherein the determination regarding the satellite communication line is a determination whether the satellite communication function is enabled in the information processing apparatus, and
wherein when it is determined that the satellite communication function is enabled in the information processing apparatus, the specific control is executed, and when it is determined that the satellite communication function is not enabled in the information processing apparatus, the specific control is not executed.

### Item 5

The program according to any one of Items 1 to 4, wherein the specific control includes control for prompting a user to disable the satellite communication function in the information processing apparatus.

### Item 6

The program according to any one of Items 1 to 5, wherein the specific control includes control for displaying a setting screen for disabling the satellite communication function in the information processing apparatus.

### Item 7

The program according to Item 6,
wherein the setting screen is displayed by another application program different from the predetermined application program, and
wherein the specific control includes control for activating the other application program and causing the other application program to display the setting screen.

### Item 8

The program according to any one of Items 1 to 7, further causing the computer to execute:
a second control step of executing predetermined control in the information processing apparatus to disable a mobile data communication function for executing communication using a mobile data communication line that is different from the satellite communication line and different from the predetermined communication line, in response to an occurrence of an error in the communication with the communication device using the predetermined communication line, the communication using the predetermined communication line being initiated upon execution of the process by the predetermined application program.

### Item 9

The program according to Item 8, further causing the computer to execute:
a first determination step of executing a determination regarding the mobile data communication line in response to an occurrence of an error in the communication with the communication device using the predetermined communication line initiated upon execution of the process by the predetermined application program,
wherein, when a result of the determination regarding the mobile data communication line is a first result, the predetermined control is executed, and when the result of the determination regarding the mobile data communication line is a second result, the predetermined control is not executed.

### Item 10

The program according to Item 9, further causing the computer to execute:
a second determination step of executing a determination regarding the satellite communication line in response to an occurrence of an error in the communication with the communication device using the predetermined communication line initiated upon execution of the process by the predetermined application program,
wherein, when a result of the determination regarding the satellite communication line is a third result, the specific control is executed, and when the result of the determination regarding the satellite communication line is a fourth result, the specific control is not executed, and
wherein, when the result of the determination regarding the mobile data communication line is the second result, and the result of the determination regarding the satellite communication line is the fourth result, an error screen indicating that communication with the communication device cannot be performed is displayed by the predetermined application program.

### Item 11

The program according to any one of Items 1 to 10, wherein the communication with the communication device using the predetermined communication line is communication for transmitting information for connecting to an access point outside the information processing apparatus to the communication device.

### Item 12

The program according to any one of Items 1 to 11, wherein the communication with the communication device using the predetermined communication line is communication for transmitting, to the communication device, at least one of a print job for causing the communication device to perform printing and a scan job for causing the communication device to perform scanning.

### Item 13

The program according to any one of Items 1 to 12, further causing the computer to execute:
an instruction step of issuing a predetermined instruction to an operating system, OS, of the information processing apparatus to identify the predetermined communication line as a communication line to be used for communication by the predetermined application program,
wherein the specific control is executed in response to an occurrence of an error in the communication with the communication device using the predetermined communication line, the communication being initiated upon execution of the process by the predetermined application program, even when the predetermined instruction is executed by the predetermined application program.

### Item 14

The program according to any one of Items 1 to 13, wherein the predetermined communication line comprises a Wi-Fi communication line.

### Item 15

The program according to any one of Items 1 to 14, wherein the communication device comprises a printer.

### Item 16

The program according to any one of Items 1 to 15, wherein an operating system, OS, of the information processing apparatus comprises an Android^{®} OS version 15 or later.

### Item 17

The program according to any one of Items 1 to 16, wherein a connection using the predetermined communication line between the information processing apparatus and the communication device is a connection not via an access point outside the information processing apparatus and the communication device.

### Item 18

The program according to any one of Items 1 to 16, wherein a connection using the predetermined communication line between the information processing apparatus and the communication device is a connection via an access point that is outside the information processing apparatus and the communication device and not connected to the Internet.

### Item 19

A control method for an information processing apparatus comprising a predetermined application program and
capable of executing communication using a satellite communication line and communication using a predetermined communication line different from the satellite communication line, the control method comprising:
an execution step of executing a process for communication with a communication device using the predetermined communication line; and
a first control step of executing specific control to disable a satellite communication function for executing communication using the satellite communication line in the information processing apparatus, in response to an occurrence of an error in the communication with the communication device using the predetermined communication line, the communication using the predetermined communication line being initiated upon execution of the process by the predetermined application program.

### Item 20

An information processing apparatus comprising a predetermined application program
and capable of executing communication using a satellite communication line and communication using a predetermined communication line different from the satellite communication line, the apparatus comprising:
at least one memory and at least one processor which functions as:
an execution unit configured to execute a process for communication with a communication device using the predetermined communication line; and
a first control unit configured to execute specific control to disable a satellite communication function for executing communication using the satellite communication line in the information processing apparatus, in response to an occurrence of an error in the communication with the communication device using the predetermined communication line, the communication using the predetermined communication line being initiated upon execution of the process by the predetermined application program.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A program that is a predetermined application program which, when the program is executed by a computer of an information processing apparatus (101) capable of executing communication using a satellite communication line and communication using a predetermined communication line different from the satellite communication line, causes the computer to execute:
an execution step (S802) of executing a process for communicating with a communication device (151) using the predetermined communication line; and
a first control step (S813, S815) of executing specific control to disable, in the information processing apparatus, a satellite communication function for executing communication using the satellite communication line in response to an occurrence of an error in the communication with the communication device (151) using the predetermined communication line, the communication using the predetermined communication line being initiated upon execution of the process by the predetermined application program.

2. The program according to claim 1, further causing the computer to execute:
a determination step (S812) of executing a determination regarding the satellite communication line in response to an occurrence of an error in the communication with the communication device (151) using the predetermined communication line initiated upon execution of the process by the predetermined application program,
wherein, when a result of the determination regarding the satellite communication line is a first result, the specific control is executed, and when the result of the determination regarding the satellite communication line is a second result, the specific control is not executed.

3. The program according to claim 2,
wherein the determination regarding the satellite communication line is a determination whether the satellite communication line is connected to a satellite, or the satellite communication function is enabled in the information processing apparatus (101),
wherein the first result is indicative of a determination that the satellite communication line is connected to a satellite or a determination that the satellite communication function is enabled in the information processing apparatus (101), and
wherein the second result is indicative of a determination that the satellite communication line is not connected to a satellite, or a determination that the satellite communication function is not enabled in the information processing apparatus (101).

4. The program according to any one of claims 1 to 3, wherein the specific control includes control for prompting a user to disable the satellite communication function in the information processing apparatus (101) or control for displaying a setting screen for disabling the satellite communication function in the information processing apparatus (101).

5. The program according to any one of claims 1 to 3,
wherein the specific control includes control for displaying a setting screen for disabling the satellite communication function in the information processing apparatus (101),
wherein the setting screen is displayed by another application program different from the predetermined application program, and
wherein the specific control includes control for activating the other application program and causing the other application program to display the setting screen.

6. The program according to any one of claims 1 to 5, further causing the computer to execute:
a second control step (S809, S811) of executing predetermined control in the information processing apparatus (101) to disable a mobile data communication function for executing communication using a mobile data communication line that is different from the satellite communication line and different from the predetermined communication line, in response to an occurrence of an error in the communication with the communication device (151) using the predetermined communication line, the communication using the predetermined communication line being initiated upon execution of the process by the predetermined application program.

7. The program according to claim 6, further causing the computer to execute:
a first determination step (S808) of executing a determination regarding the mobile data communication line in response to an occurrence of an error in the communication with the communication device (151) using the predetermined communication line initiated upon execution of the process by the predetermined application program,
wherein, when a result of the determination regarding the mobile data communication line is a first result, the predetermined control is executed, and when the result of the determination regarding the mobile data communication line is a second result, the predetermined control is not executed.

8. The program according to claim 7, further causing the computer to execute:
a second determination step (S812) of executing a determination regarding the satellite communication line in response to an occurrence of an error in the communication with the communication device (151) using the predetermined communication line initiated upon execution of the process by the predetermined application program,
wherein, when a result of the determination regarding the satellite communication line is a third result, the specific control is executed, and when the result of the determination regarding the satellite communication line is a fourth result, the specific control is not executed, and
wherein, when the result of the determination regarding the mobile data communication line is the second result, and the result of the determination regarding the satellite communication line is the fourth result, an error screen indicating that communication with the communication device (151) cannot be performed is displayed by the predetermined application program.

9. The program according to any one of claims 1 to 8, wherein the communication with the communication device (151) using the predetermined communication line is communication for transmitting information for connecting to an access point outside the information processing apparatus (101) to the communication device (151) or communication for transmitting, to the communication device (151), at least one of a print job for causing the communication device (151) to perform printing and a scan job for causing the communication device (151) to perform scanning.

10. The program according to any one of claims 1 to 9, further causing the computer to execute:
an instruction step (S801) of issuing a predetermined instruction to an operating system, OS, of the information processing apparatus (101) to identify the predetermined communication line as a communication line to be used for communication by the predetermined application program,
wherein the specific control is executed in response to an occurrence of an error in the communication with the communication device (151) using the predetermined communication line, the communication being initiated upon execution of the process by the predetermined application program, even when the predetermined instruction is executed by the predetermined application program.

11. The program according to any one of claims 1 to 10, wherein the predetermined communication line comprises a Wi-Fi communication line.

12. The program according to any one of claims 1 to 11, wherein an operating system, OS, of the information processing apparatus (101) comprises an Android^{®} OS version 15 or later.

13. The program according to any one of claims 1 to 12, wherein a connection using the predetermined communication line between the information processing apparatus (101) and the communication device (151) is:
a connection not via an access point outside the information processing apparatus (101) and the communication device (151); or
a connection via an access point that is outside the information processing apparatus (101) and the communication device (151) and not connected to the Internet.

14. A control method for an information processing apparatus (101) comprising a predetermined application program and
capable of executing communication using a satellite communication line and communication using a predetermined communication line different from the satellite communication line, the control method comprising:
an execution step (S802) of executing a process for communicating with a communication device (151) using the predetermined communication line; and
a first control step (S813, S815) of executing specific control to disable, in the information processing apparatus (101), a satellite communication function for executing communication using the satellite communication line, in response to an occurrence of an error in the communication with the communication device (151) using the predetermined communication line, the communication using the predetermined communication line being initiated upon execution of the process by the predetermined application program.

15. An information processing apparatus (101) comprising a predetermined application program and
capable of executing communication using a satellite communication line and communication using a predetermined communication line different from the satellite communication line, the apparatus comprising:
execution means for executing a process for communicating with a communication device (151) using the predetermined communication line; and
first control means for executing specific control to disable, in the information processing apparatus (101), a satellite communication function for executing communication using the satellite communication line, in response to an occurrence of an error in the communication with the communication device (151) using the predetermined communication line, the communication using the predetermined communication line being initiated upon execution of the process by the predetermined application program.
